# DEMANDE DE BREVET EUROPEEN

(11) **EP 4 403 385 A2**
(43) Date de publication de la demande: **24.07.2024**
(21) Numéro de dépôt: 24180029.1
(22) Date de dépôt: 09.07.2021
(51) Int. Cl.: B60G 1/00

(54) **CHÂSSIS À VOIE VARIABLE POUR ENGIN AGRICOLE**

(30) Priorité: 15.07.2020 FR 2007384
(62) Demande divisionnaire de: 21749666.0
(71) Demandeur: Exel Industries, 51200 Epernay (FR)
(72) Inventeur: LESTRADET, Denis, 75009 PARIS (FR); LESTRADET, Pascal, 75009 PARIS (FR)
(74) Mandataire: Argyma

(57) **Abrégé**

L'invention concerne un châssis à voie variable (100) pour engin agricole comprenant un châssis principal (11) et au moins un ensemble (10) comprenant une paire de barres de guidage (12a, 12b), des portions de châssis gauche (13a) et droite (13b) coulissantes sur chacune des barres de guidage avant et arrière, des supports de roue gauche (14a) et droite (14b) pivotants respectivement sur un bras de suspension gauche (15a) et sur un bras de suspension droit (15b) eux-mêmes pivotants et coulissants sur l'une des barres de guidage avant et arrière, ainsi que des systèmes de suspension gauche (16a) et droit (16b) montés respectivement entre le bras de suspension gauche et la portion de châssis gauche ou le châssis principal et entre le bras de suspension droit et la portion de châssis droite ou le châssis principal.

## Description

### DOMAINE TECHNIQUE

L'invention concerne un châssis à voie variable pour engin agricole, ainsi qu'un engin agricole comprenant un tel châssis à voie variable.

### ÉTAT DE LA TECHNIQUE ANTÉRIEURE

Plusieurs engins agricoles à voie variable sont connus de l'art antérieur. Ces engins agricoles comprennent une ou deux barres de guidage transversales par rapport à une direction longitudinale orientée d'arrière en avant, un châssis principal fixe qui est monté sur la ou sur chaque barre de guidage et qui supporte par exemple une cabine conducteur, des portions gauche et droite de châssis montées coulissantes sur la ou sur chacune des barres de guidage suivant leur axe de guidage, des roues chacune montée sur l'une des portions gauche et droite de châssis, ainsi que des systèmes de suspension chacun monté entre l'une des roues et celle des portions gauche et droite de châssis sur laquelle ladite roue est montée.

Un tel engin agricole permet de faire varier une distance transversale entre les roues de l'engin agricole, en coulissant les portions gauche et droite de châssis, notamment pour les écarter ou pour les rapprocher l'une de l'autre, de manière à changer une configuration de voie de l'engin agricole, notamment en passant d'une configuration de voie large à une configuration de voie étroite et vice versa.

Par exemple, dans le domaine de la pulvérisation agricole, un tel engin agricole permet d'adopter la configuration de voie étroite, lorsque l'engin agricole roule sur la route, et une configuration de voie plus large, lorsque l'engin agricole roule dans un champ de végétaux à traiter. Par ailleurs, lorsque les végétaux sont plantés en rangs longitudinaux dans le champ, il est possible avec un tel engin agricole d'adapter la configuration de voie de l'engin agricole à la distance transversale entre les rangs de végétaux à traiter pour le faire circuler entre lesdits rangs, ou encore d'adapter la configuration de voie de l'engin agricole à la largeur des rangs de végétaux à traiter que l'engin agricole enjambe. Les risques que l'engin agricole endommage les végétaux à traiter lors de la pulvérisation sont ainsi réduits.

Or, de tels engins agricoles peuvent être complexes à fabriquer et à monter, notamment lorsqu'ils sont constitués de nombreuses pièces. Ils doivent en outre être suffisamment robustes pour supporter des charges importantes, telles qu'une cuve remplie de liquide de traitement dans le domaine de la pulvérisation agricole.
Il existe donc un besoin de proposer un châssis à voie variable pour engin agricole à la fois simple à fabriquer et à monter et robuste.

### EXPOSÉ DE L'INVENTION

A cet effet, l'invention a pour objet un châssis à voie variable pour engin agricole, s'étendant, d'avant en arrière, suivant une direction longitudinale et, de droite à gauche suivant une direction transversale, perpendiculaire à la direction longitudinale, le châssis à voie variable comprenant un châssis principal fixe et au moins un ensemble comprenant lui-même :
- une paire de barres de guidage fixes comprenant une barre de guidage avant et une barre de guidage arrière sur lesquelles le châssis principal est fixé, chacune desdites barres de guidage avant et arrière s'étendant suivant un axe de guidage globalement transversal,
- une paire de portions de châssis comprenant une portion de châssis gauche et une portion de châssis droite chacune montée coulissante sur chacune des barres de guidage avant et arrière suivant leur axe de guidage respectif,
- une première paire de supports de roue comprenant un support de roue gauche sur lequel une première roue gauche est destinée à être montée rotative, et un support de roue droite sur lequel une première roue droite est destinée à être montée rotative,
- une première paire de bras de suspension comprenant un bras de suspension gauche et un bras de suspension droit montés pivotants sur l'une des barres de guidage avant et arrière, autour de l'axe de guidage de ladite barre de guidage avant ou arrière, et coulissants sur ladite barre de guidage ou arrière suivant l'axe de guidage de ladite barre de guidage avant ou arrière,
   les supports de roue gauche et droit de la première paire étant respectivement montés pivotants sur le bras de suspension gauche et sur le bras de suspension droit de la première paire, autour d'un axe de pivotement globalement orienté suivant une direction verticale, perpendiculaire aux directions longitudinale et transversale,
- une première paire de systèmes de suspension comprenant un système de suspension gauche et un système de suspension droit, le système de suspension gauche étant monté entre le bras de suspension gauche de la première paire et la portion de châssis gauche ou le châssis principal, en s'étendant suivant un premier axe de suspension gauche, le système de suspension droit étant monté entre le bras de suspension droit de la première paire et la portion de châssis droite ou le châssis principal, en s'étendant suivant un premier axe de suspension droit.

Selon des variantes de réalisation qui peuvent être prises ensemble ou séparément :
- le ou l'un au moins des ensembles comprend une première paire d'amortisseurs comprenant un amortisseur gauche et un amortisseur droit, l'amortisseur gauche étant monté entre le bras de suspension gauche de la première paire et la portion de châssis gauche ou le châssis principal, l'amortisseur droit étant monté entre le bras de suspension droit de la première paire et la portion de châssis droite ou le châssis principal ;
- le ou l'un au moins des ensembles comprend un mécanisme d'entraînement conçu :
   ∘ d'une part, pour entraîner en coulissement la portion de châssis gauche et le bras de suspension gauche de la première paire par rapport aux barres de guidage avant et arrière, suivant les axes de guidage, entre une première position et une deuxième position dans laquelle la portion de châssis gauche et le bras de suspension gauche sont chacun situés plus à gauche que dans la première position,
   ∘ d'autre part, pour entraîner en coulissement la portion de châssis droite et le bras de suspension droit de la première paire par rapport aux barres de guidage avant et arrière, suivant les axes de guidage, entre une première position et une deuxième position dans laquelle la portion de châssis droite et le bras de suspension droit sont chacun situés plus à droite que dans la première position ;
- le mécanisme d'entraînement est conçu :
   ∘ d'une part, pour entraîner en coulissement la portion de châssis gauche entre les première et deuxième positions, la portion de châssis gauche étant elle-même conçue pour entraîner en coulissement le bras de suspension gauche de la première paire entre les première et deuxième positions,
   ∘ d'autre part, pour entraîner en coulissement la portion de châssis droite entre les première et deuxième positions, la portion de châssis droite étant elle-même conçue pour entraîner en coulissement le bras de suspension droit de la première paire entre les première et deuxième positions ;
- le ou l'un au moins des ensembles comprend un premier dispositif d'anti-basculement apte à solidariser en pivotement le bras de suspension gauche et le bras de suspension droit de la première paire par rapport à la barre de guidage avant ou arrière sur laquelle lesdits bras de suspension gauche et droit sont montés, lorsque lesdits bras de suspension gauche et droite occupent chacun leur première position ;
- le premier dispositif d'anti-basculement comprend une pièce femelle d'accouplement portée par l'un parmi le bras de suspension gauche et le bras de suspension droit de la première paire, et une pièce mâle d'accouplement portée par l'autre parmi le bras de suspension gauche et le bras de suspension droit de la première paire ;
- la pièce femelle d'accouplement comprend une ouverture s'étendant autour d'un axe d'accouplement, parallèle aux axes de guidage des barres de guidage avant et arrière, et donnant en outre accès à un logement ;
- la pièce mâle d'accouplement comprend une tige s'étendant suivant l'axe d'accouplement, ladite tige étant apte à s'introduire dans le logement de la pièce femelle d'accouplement, par l'ouverture, lorsque les bras de suspension gauche et droit de la première paire coulissent depuis leur deuxième position vers leur première position ou qu'ils occupent chacun leur première position ;
- la pièce mâle d'accouplement comprend un actionneur conçu pour entraîner le doigt en translation suivant l'axe d'accouplement, par rapport au bras de suspension gauche ou droit de la première paire qui porte la pièce mâle d'accouplement, entre une position active dans laquelle le doigt occupe le logement de la pièce femelle d'accouplement et une position inactive dans laquelle le doigt libère le logement de la pièce femelle d'accouplement, lorsque les bras de suspension gauche et droite de la première paire occupent chacun leur première position ;
- le ou l'un au moins des ensembles comprend en outre :
   ∘ une deuxième paire de supports de roue comprenant un support de roue gauche sur lequel une deuxième roue gauche est destinée à être montée rotative, et un support de roue droite sur lequel une deuxième roue droite est destinée à être montée rotative,
   ∘ une deuxième paire de bras de suspension comprenant un bras de suspension gauche et un bras de suspension droit montés pivotants sur l'autre parmi les barres de guidage avant ou arrière de la première paire, autour de l'axe de guidage de ladite barre de guidage avant ou arrière, et coulissants sur ladite barre de guidage avant ou arrière suivant ledit axe de guidage, les supports de roue gauche et droite de la deuxième paire étant respectivement montés pivotants sur le bras de suspension gauche et sur le bras de suspension droit de la deuxième paire, autour d'un axe de pivotement globalement vertical,
   ∘ une deuxième paire de systèmes de suspension comprenant un système de suspension gauche et un système de suspension droit, le système de suspension gauche étant monté entre le bras de suspension gauche de la deuxième paire et la portion de châssis gauche ou le châssis principal, en s'étendant suivant un deuxième axe de suspension gauche, le système de suspension droit étant monté entre le bras de suspension droit de la deuxième paire et la portion de châssis droite ou le châssis principal, en s'étendant suivant un deuxième axe de suspension droit ;
- le châssis à voie variable comprend deux ensembles, le châssis principal comprenant une partie de châssis avant et une partie de châssis arrière articulée sur la partie de châssis avant autour d'un axe d'articulation sensiblement vertical, les barres de guidage avant et arrière de l'un des ensembles étant fixées sur l'une des parties de châssis avant et arrière du châssis principal, les barres de guidage avant et arrière de l'autre des ensembles étant fixées sur l'autre des parties de châssis avant et arrière du châssis principal ;
- le ou chaque ensemble comprend des deuxièmes dispositifs d'anti-basculement, chaque deuxième dispositif d'anti-basculement étant monté d'une part, sur l'un des bras de suspension parmi les bras de suspension gauche et droit de la première paire ou de la première et de la deuxième paires, et d'autre part, sur la portion de châssis gauche ou droite sur laquelle ledit bras de suspension est monté ou sur le châssis fixe ou sur la partie de châssis avant ou arrière du même ensemble que ledit bras de suspension, le deuxième dispositif d'anti-basculement étant en outre conçu pour occuper :
   ∘ d'une part, une position de contrainte maximale dans laquelle le deuxième dispositif d'anti-basculement contraint une longueur d'extension maximale du système de suspension gauche ou droit qui est monté sur le même bras de suspension que le deuxième dispositif d'anti-basculement, à une première longueur prédéterminée, la longueur d'extension maximale étant prise suivant le premier ou le deuxième axe de suspension gauche ou droit dudit système de suspension gauche ou droit,
   ∘ d'autre part, une position de contrainte minimale ou nulle dans laquelle le deuxième dispositif d'anti-basculement contraint la longueur d'extension maximale dudit système de suspension gauche ou droit à une deuxième longueur prédéterminée, qui est inférieure à la première longueur, ou libère toute contrainte de longueur d'extension maximale dudit système de suspension gauche ou droit ;
- chaque deuxième dispositif d'anti-basculement comprend un actionneur monté d'une part, sur l'un parmi le bras de suspension et celui de la portion de châssis avant ou arrière, du châssis principal et de la partie de châssis avant ou arrière sur lequel le deuxième dispositif d'anti-basculement est monté, et d'autre part, sur une première extrémité d'une élingue, la deuxième extrémité de l'élingue étant montée sur l'autre parmi le bras de suspension et celui de la portion de châssis gauche ou droite, du châssis principal et de la partie de châssis avant ou arrière sur lequel le deuxième dispositif d'anti-basculement est monté ;
- l'actionneur est conçu pour tendre l'élingue depuis une position détendue dans laquelle le deuxième dispositif d'anti-basculement occupe la position de contrainte minimale ou nulle vers une position tendue dans laquelle l'élingue est plus tendue qu'en position détendue et le deuxième dispositif d'anti-basculement occupe la position de contrainte maximale, et pour détendre l'élingue depuis la position tendue vers la position détendue.

L'invention a aussi pour objet un engin agricole comprenant un châssis à voie variable tel que précédemment décrit. L'engin agricole est par exemple une remorque agricole ou un tracteur agricole.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :
- la figure 1 est une vue en perspective d'un châssis à voie variable pour engin agricole selon un mode de réalisation de l'invention, des portions de châssis gauche et droite occupant chacun une première position et le châssis à voie variable étant dans une configuration de voie étroite ;
- la figure 2 est une vue de détail du châssis à voie variable illustré à la figure 1, la portion de châssis gauche occupant une deuxième position et la portion de châssis droite occupant la première position ;
- la figure 3 est une autre vue de détail du châssis à voie variable illustré à la figure 1, la portion de châssis gauche occupant une deuxième position et la portion de châssis droite occupant la première position ;
- la figure 4 est une vue en perspective d'un châssis à voie variable pour engin agricole selon un autre mode de réalisation de l'invention, la portion de châssis gauche occupant la deuxième position et la portion de châssis droite occupant la première position ;
- la figure 5 est une vue en perspective d'un châssis à voie variable pour engin agricole selon un autre mode de réalisation de l'invention, les portions de châssis gauche et droite occupant chacun une première position et le châssis à voie variable étant dans une configuration de voie étroite ;
- la figure 6 est une vue en perspective d'un châssis à voie variable pour engin agricole selon un autre mode de réalisation de l'invention, la portion de châssis gauche occupant la deuxième position et la portion de châssis droite occupant la première position ;
- la figure 7 est une vue en perspective d'un châssis à voie variable pour engin agricole selon un autre mode de réalisation de l'invention ;
- la figure 8 est une vue en perspective d'un châssis à voie variable pour engin agricole selon un autre mode de réalisation de l'invention, la portion de châssis gauche occupant la deuxième position et la portion de châssis droite occupant la première position ;
- la figure 9 est une vue en perspective d'un châssis à voie variable pour engin agricole selon un autre mode de réalisation de l'invention, la portion de châssis gauche occupant la deuxième position et la portion de châssis droite occupant la première position ;
- la figure 10 est une vue schématique, de face, d'un engin agricole comprenant un châssis à voie variable selon un mode de réalisation de l'invention.

### DESCRIPTION DETAILLEE

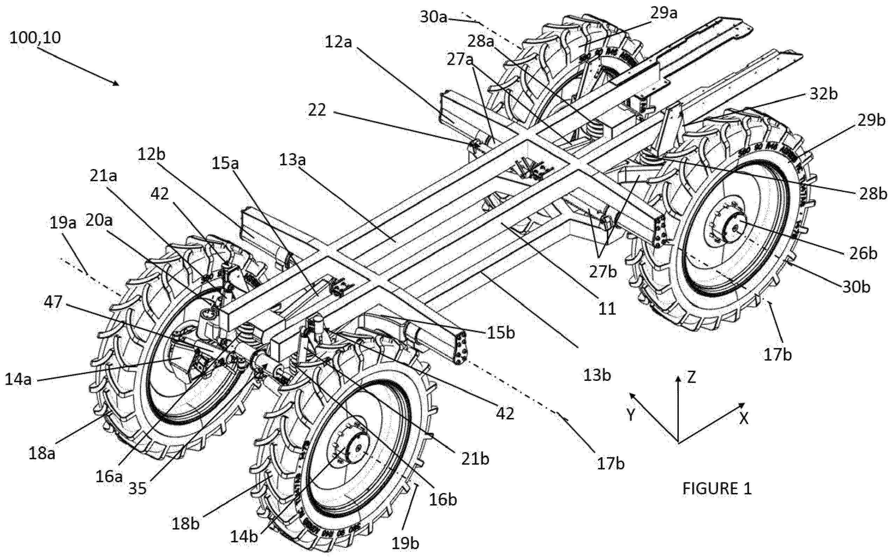

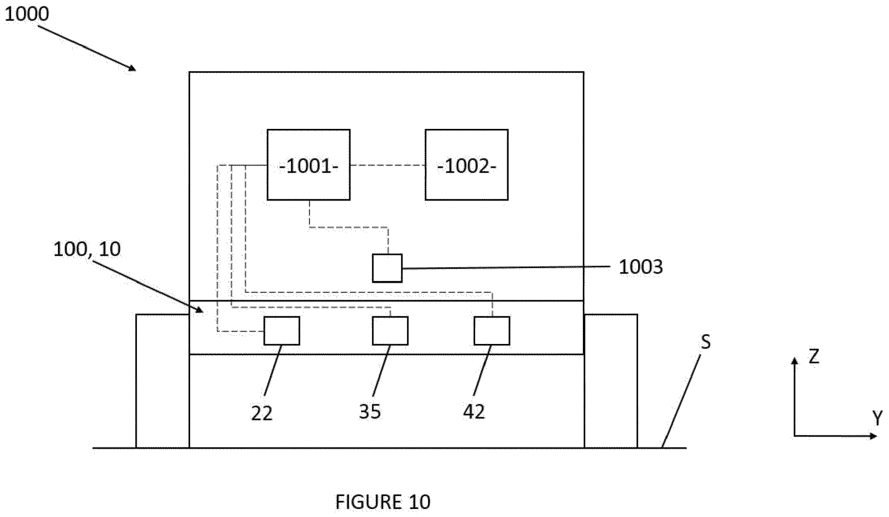

Les figures 1 à 9 montrent plusieurs exemples de châssis à voie variable 100 pour un engin agricole 1000, tel qu'un tracteur agricole ou une remorque agricole, selon l'invention. La figure 10 montre un exemple d'engin agricole 1000 comprenant le châssis à voie variable 100.

Dans la suite de la description, il est adopté à titre non limitatif un repère global comportant une direction longitudinale X orientée d'arrière en avant dans le sens d'avancement de l'engin agricole 1000, une direction transversale Y orientée de droite à gauche, et une direction verticale Z orientée de bas en haut. Les directions longitudinale X et transversale Y sont horizontales et sensiblement parallèles à un sol S.

Lorsque le sol S est « plat », c'est-à-dire avec une pente nulle, la direction verticale Z est confondue avec la direction de la force de pesanteur du système de pulvérisation agricole 100. Lorsque le sol est en pente, la direction verticale Z est inclinée par rapport à la direction de la force de pesanteur du système de pulvérisation agricole 100.

Le châssis à voie variable 100 comprend un châssis principal 11 fixe ainsi qu'au moins un ensemble 10 comprenant lui-même une paire de barres de guidage 12a, 12b fixes, une paire de portions de châssis 13a, 13b, une première paire de supports de roue 14a, 14b, une première paire de bras de suspension 15a, 15b, ainsi qu'une première paire de systèmes de suspension 16a, 16b.

Le châssis principal 11 supporte par exemple une cabine conducteur (non représentée), et/ou une cuve (non représentée) destinée à contenir du liquide de traitement, tel que du produit phytosanitaire ou de l'engrais liquide et un système de pulvérisation (non représentée) destiné à pulvériser du liquide de traitement provenant de la cuve sur des végétaux à traiter d'un champ.

La paire de barres de guidage 12a, 12b comprend une barre de guidage avant 12a et une barre de guidage arrière 12b sur chacune desquelles le châssis principal 11 est fixé. Le châssis principal 11 est par exemple fixé en deux points sur chacune des barres de guidage avant 12a et arrière 12b, notamment aux extrémités de chaque barre de guidage avant 12a et arrière 12b.

Chacune des barres de guidage avant 12a et arrière 12b s'étend en outre suivant un axe de guidage 17a, 17b globalement transversal. Les barres de guidage avant 12a et arrière 12b sont donc parallèles entre elles et décalées l'une par rapport à l'autre suivant la direction longitudinale X, la barre de guidage avant 12a étant décalée par rapport à la barre de guidage arrière 12b vers l'avant.

La paire de portions de châssis 13a, 13b comprend une portion de châssis gauche 13a et une portion de châssis droite 13b.

Chacune des portions de châssis gauche 13a et droite 13b est montée coulissante sur chacune des barres de guidage avant 12a et arrière 12b suivant leur axe de guidage 17a, 17b respectif. La portion de châssis gauche 13a est montée à gauche sur les barres de guidage avant 12a et arrière 12b par rapport à la portion de châssis droite 13b, tandis que la portion de châssis droite 13b est montée à droite sur les barres de guidage avant 12a et arrière 12b par rapport à la portion de châssis gauche 13a. Les portions de châssis gauche 13a et droite 13b sont par exemple montées de part et d'autre d'un plan médian, vertical et longitudinal, du châssis à voie variable 100.

La première paire de supports de roue 14a, 14b comprend un support de roue gauche 14a sur lequel une première roue gauche 18a est montée rotative, notamment autour d'un premier axe de rotation gauche 19a globalement horizontal, et un support de roue droit 14b sur lequel une première roue droite 18b est montée rotative, notamment autour d'un premier axe de rotation droit 19b globalement horizontal (figures 1 à 3). Les supports de roue gauche 14a et droit 14b portent par exemple chacun un moteur, électrique ou hydraulique, respectivement destiné à entraîner les premières roues gauche 18a et droite 18b en rotation autour des premiers axes de rotation gauche 19a et droit 19b.

La première paire de bras de suspension 15a, 15b comprend un bras de suspension gauche 15a et un bras de suspension droit 15b.

Les bras de suspension gauche 15a et droit 15b de la première paire sont montés pivotants sur l'une des barres de guidage avant 12a et arrière 12b, autour de l'axe de guidage 17a, 17b de ladite barre de guidage avant 12a ou arrière 12b. Les bras de suspension gauche 15a et droit 15b de la première paire sont en outre montés coulissants sur ladite barre de guidage avant 12a ou arrière 12b, suivant l'axe de guidage 17a, 17b de ladite barre de guidage avant 12a ou arrière 12b. Une liaison pivot glissant est ainsi prévue entre chacun des bras de suspension gauche 15a et droit 15b de la première paire et ladite barre de guidage avant 12a ou arrière 12b. Le bras de suspension gauche 15a de la première paire est monté à gauche sur ladite barre de guidage avant 12a ou arrière 12b par rapport au bras de suspension droit 15b de la première paire, tandis que le bras de suspension droit 15b est monté à droite sur ladite barre de guidage avant 12a ou arrière 12b par rapport au bras de suspension gauche 15a. Les bras de suspension gauche 15a et droit 15b de la première paire sont par exemple montées de part et d'autre du plan médian, vertical et longitudinal, du châssis à voie variable 100. Les bras de suspension gauche 15a et droit 15b de la première paire sont ainsi montés pivotants et coulissants sur la même barre de guidage avant 12a ou arrière 12b de la première paire.

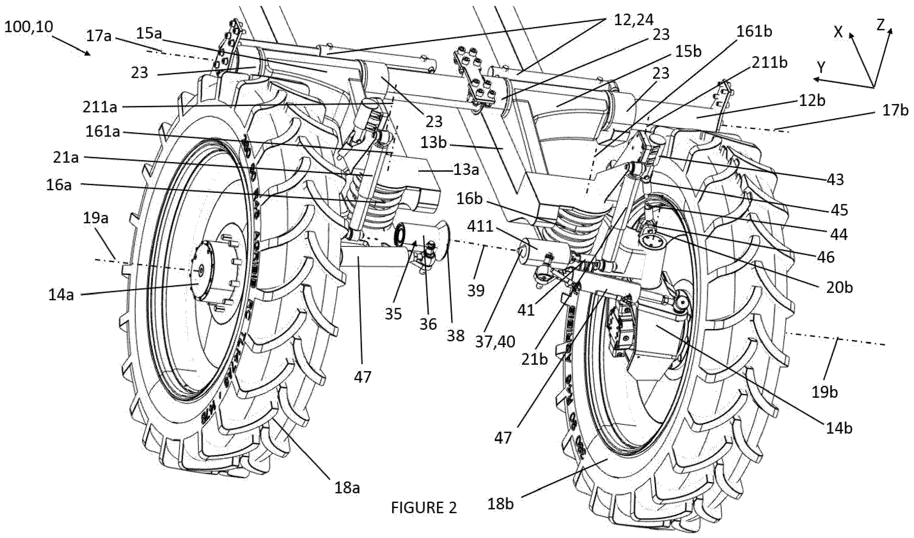

Les supports de roue gauche 14a et droit 14b de la première paire sont en outre respectivement montés pivotants sur le bras de suspension gauche 15a et le bras de suspension droit 15b de la première paire, autour d'un axe de pivotement 20a, 20b globalement vertical (figure 2).

La première paire de systèmes de suspension 16a, 16b comprend un système de suspension gauche 16a et un système de suspension droit 16b.

Le système de suspension gauche 16a de la première paire est par exemple monté entre le bras de suspension gauche 15a de la première paire et la portion de châssis gauche 13a, en s'étendant suivant un premier axe de suspension gauche 161a, tandis que le système de suspension droit 16b de la première paire est monté entre le bras de suspension droit 15b de la première paire et la portion de châssis droite 13b, en s'étendant suivant un premier axe de suspension droit 161b (figure 2).

Les systèmes de suspension gauche 16a et droit 16b de la première paire sont en outre conçus pour se comprimer, respectivement suivant le premier axe de suspension gauche 161a, le bras de suspension gauche 15a de la première partie se rapprochant de la portion de châssis gauche 13a, et suivant le premier axe de suspension droit 161b, le bras de suspension droit 15b de la première partie se rapprochant de la portion de châssis droite 15b, et pour se détendre, respectivement suivant le premier axe de suspension gauche 161a, le bras de suspension gauche 15a s'écartant de la portion de châssis gauche 13a, et suivant le premier axe de suspension droit 161b, le bras de suspension droit 15b s'écartant de la portion de châssis droite 15b.

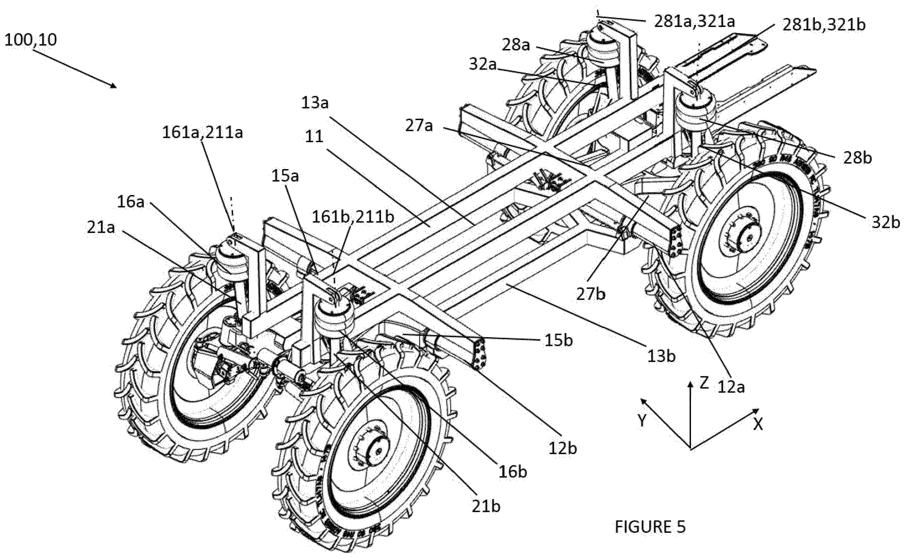

En variante (figure 5), le système de suspension gauche 16a de la première paire est monté entre le bras de suspension gauche 15a de la première paire et le châssis principal 11, en s'étendant suivant un premier axe de suspension gauche 161a, tandis que le système de suspension droit 16b de la première paire est monté entre le bras de suspension droit 15b de la première paire et le châssis principal 11, en s'étendant suivant un premier axe de suspension droit 161b.

Les systèmes de suspension gauche 16a et droit 16b de la première paire sont en outre conçus pour se comprimer, respectivement suivant le premier axe de suspension gauche 161a, le bras de suspension gauche 15a se rapprochant du châssis principal 11, et suivant le premier axe de suspension droit 161b, le bras de suspension droit 15b se rapprochant du châssis principal 11, et pour se détendre, respectivement suivant le premier axe de suspension gauche 161a, le bras de suspension gauche 15a s'écartant du châssis principal 11, et suivant le premier axe de suspension droit 161b, le bras de suspension droit 15b s'écartant du châssis principal 11.

De cette manière, les portions de châssis gauche 13a et droite 13b et les bras de suspension gauche 15a et droit 15b de la première paire sont aptes à se déplacer en translation par rapport aux barres de guidage avant 12a et arrière 12b, globalement suivant la direction transversale Y, pour faire varier une distance transversale entre les supports de roue gauche 14a et droit 14b de la première paire et donc entre les premières roues gauche 18a et droite 18b et ainsi permettre différentes configurations de voie du châssis à voie variable 100.

En particulier, dans une configuration de voie étroite (figures 1 et 5), les portions de châssis gauche 13a et droite 13b sont transversalement au plus proches l'une de l'autre et les bras de suspension gauche 15a et droit 15b de la première paire sont transversalement au plus proches l'un de l'autre, de sorte que la distance transversale entre les supports de roue gauche 14a et droit 14b de la première paire et donc entre les premières roues gauche 18a et droite 18b est la plus faible. Au contraire, dans une configuration de voie large, les portions de châssis gauche 13a et droite 13b sont transversalement les plus éloignées l'une de l'autre et les bras de suspension gauche 15a et droit 15b de la première paire sont transversalement les plus éloignés l'un de l'autre, de sorte que la distance transversale entre les supports de roue gauche 14a et droit 14b de la première paire et donc entre les premières roues gauche 18a et droite 18b est la plus élevée. Toute configuration intermédiaire (figures 2 à 4 et 6 à 9) entre les configurations de voie étroite et de voie large peut aussi permise.

Par exemple, dans le domaine de la pulvérisation agricole, la configuration de voie étroite est adoptée pour le roulage sur route, la configuration de voie large ou les configurations de voie intermédiaires sont en revanche adoptées pour roulage dans les champs de végétaux à traiter.

Par ailleurs, le montage des bras de suspension gauche 15a et droit 15b de la première paire, des supports de roue gauche 14a et droit 14b de la première paire, ainsi que des systèmes de suspension gauche 16a et droit 16b de la première paire permet d'obtenir une suspension indépendante pour les premières roues gauche 18a et droite 18b et donc d'améliorer la tenue de route de l'engin agricole 1000 quelle que soit la configuration de voie du châssis à voie variable 100.

Le châssis à voie variable 100 ne comprend en outre qu'un nombre limité de pièces à fabriquer et à monter. De plus, le montage des différentes pièces entre elles est simple. La mise en oeuvre de la paire de barres de guidage gauche 12a et droite 12b, ainsi que des portions de châssis gauche 13a et droite 13b montées sur les barres de guidage gauche 12a et droite 12b confère aussi de la robustesse au châssis à voie variable 100.

L'ensemble 10 du châssis à voie variable 100 comprend par exemple aussi une première paire d'amortisseurs 21a, 21b comprenant un amortisseur gauche 21a et un amortisseur droit 21b (figures 1, 2 et 4 à 9).

L'amortisseur gauche 21a de la première paire est par exemple monté entre le bras de suspension gauche 15a de la première paire et la portion de châssis gauche 13a, en s'étendant suivant un premier axe d'amortissement gauche 211a, tandis que l'amortisseur droit 21b de la première paire est monté entre le bras de suspension droit 15b de la première paire et la portion de châssis droit 13b, en s'étendant suivant un premier axe d'amortissement droit 211b (figure 2).

En variante (figure 5), l'amortisseur gauche 21a de la première paire est monté entre le bras de suspension gauche 15a de la première paire et le châssis principal 11, en s'étendant suivant un premier axe d'amortissement gauche 211a, tandis que l'amortisseur droit 21b de la première paire est monté entre le bras de suspension droit 15b de la première paire et le châssis principal 11, en s'étendant suivant un premier axe d'amortissement droit 211b.

L'amortisseur gauche 21a et l'amortisseur droit 21b de la première paire sont respectivement conçus pour amortir une compression et une détente du système de suspension gauche 16a et du système de suspension droit 16b de la première paire, et donc un déplacement du bras de suspension gauche 15a de la première paire par rapport à la portion de châssis gauche 13a ou au châssis principal 11 et un déplacement du bras de suspension droit 15b de la première paire par rapport à la portion de châssis droit 13b ou au châssis principal 11.

Le système de suspension gauche 16a de la première paire et l'amortisseur gauche 21a de la première paire peuvent être montés indépendamment l'un de l'autre ou encore de manière séparée entre le bras de suspension gauche 15a de la première paire et la portion de châssis gauche 13a ou le châssis principal 11 (figures 1, 2, 4 et 6 à 9), chacun du système de suspension gauche 16a et de l'amortisseur gauche 21a étant monté directement sur le bras de suspension gauche 15a d'une part, et sur la portion de châssis gauche 13a ou le châssis principal 11 d'autre part. Le premier axe de suspension gauche 161a et le premier axe d'amortissement gauche 211a ne sont pas confondus.

Le système de suspension gauche 16a et l'amortisseur gauche 21a peuvent en revanche être montés ensemble entre le bras de suspension gauche 15a de la première paire et la portion de châssis gauche 13a ou le châssis principal 11 (figure 5), le premier axe de suspension gauche 161a et le premier axe d'amortissement gauche 211a étant confondus.

Il en est de même du système de suspension droit 16b de la première paire et de l'amortisseur droit 21b de la première paire, qui peuvent être montés indépendamment ou ensemble entre le bras de suspension droit 15b de la première paire et la portion de châssis droite 13b ou le châssis principal 11.

L'ensemble 10 du châssis à voie variable 100 peut encore comprendre un mécanisme d'entraînement 22 conçu :
- d'une part, pour entraîner en coulissement la portion de châssis gauche 13a et le bras de suspension gauche 15a de la première paire par rapport aux barres de guidage avant 12a et arrière 12b, suivant les axes de guidage 17a, 17b, entre une première position et une deuxième position dans laquelle la portion de châssis gauche 13a et le bras de suspension gauche 15a sont chacun situés plus à gauche que dans la première position,
- d'autre part, pour entraîner en coulissement la portion de châssis droite 13b et le bras de suspension droit 15b de la première paire par rapport aux barres de guidage avant 12a et arrière 12b, suivant les axes de guidage 17a, 17b, entre une première position et une deuxième position dans laquelle la portion de châssis droite 13b et le bras de suspension droit 15b sont chacun situés plus à droite que dans la première position.

Lorsque les portions de châssis gauche 13a et droite 13b et les bras de suspension gauche 15a et droit 15b de la première paire occupent leur première position, le châssis à voie variable 100 est dans la configuration de voie étroite (figures 1 et 5). Au contraire, lorsque les portions de châssis gauche 13a et droite 13b et les bras de suspension gauche 15a et droit 15b de la première paire occupent leur deuxième position, le châssis à voie variable 100 est dans la configuration de voie large.

Les portions de châssis gauche 13a et droite 13b et les bras de suspension gauche 15a et droit 15b de la première paire peuvent en outre occuper toute position entre les première et deuxième positions. Les figures 2, 4, 6, 8 et 9 montrent la portion de châssis gauche 13a et le bras de suspension gauche 15a de la première paire dans leur première position, et la portion de châssis droite 13b et le bras de suspension droit 15b de la première paire dans leur deuxième position.

Le mécanisme d'entraînement 22 est par exemple conçu :
- d'une part, pour entraîner en coulissement la portion de châssis gauche 13a entre les première et deuxième positions, la portion de châssis gauche 13a étant elle-même conçue pour entraîner en coulissement le bras de suspension gauche 15a de la première paire entre les première et deuxième positions,
- d'autre part, pour entraîner en coulissement la portion de châssis droite 13b entre les première et deuxième positions, la portion de châssis droite 13b étant elle-même conçue pour entraîner en coulissement le bras de suspension droit 15b de la première paire entre les première et deuxième positions.

De cette manière, les bras de suspension gauche 15a et droit 15b de la première paire sont respectivement solidaires en coulissement des portions de châssis gauche 13a et droit 13b. Cela permet de simplifier le montage du mécanisme d'entraînement 22.

Chacune des portions de châssis gauche 13a et droite 13b comprend par exemple une première paire d'oreilles 23 par l'intermédiaire desquelles ladite portion de châssis gauche 13a ou droite 13b est montée coulissante sur la même barre de guidage avant 12a ou arrière 12b que les bras de suspension gauche 15a et droit 15b de la première paire (figure 2). Les oreilles 23 de la première paire de chacune des portions de châssis gauche 13a et droite 13b sont en outre décalés l'une par rapport à l'autre suivant l'axe de guidage 17a, 17b de ladite barre de guidage avant 12a ou arrière 12b, de manière à définir un espace libre entre lesdites oreilles 23. Chacun des bras de suspension gauche 15a et droit 15b de la première paire est en outre monté coulissant sur ladite barre de guidage 12a ou arrière 12b, entre les oreilles 23 de la portion de châssis gauche 13a ou droite 13b qui l'entraîne en coulissement, dans l'espace libre défini entre lesdites oreilles 23. Les portions de châssis gauche 13a et droite 13b entraînent ainsi respectivement le bras de suspension gauche 15a et le bras de suspension droit 15b par l'intermédiaire de leur première paire d'oreilles 23.

Les systèmes de suspension gauche 16a et droit 16b de la première paire sont par exemple respectivement montés sur la portion de châssis gauche 13a et la portion de châssis droite 13b, par l'intermédiaire de l'une des oreilles 23 de la première paire de ladite portion de châssis gauche 13a ou droite 13, ladite oreille 23 se prolongeant depuis la barre de guidage avant 12a ou arrière 12b sur laquelle ladite oreille 23 est montée, vers le support de roue gauche 14a ou droit 14b de la première paire. Les amortisseurs gauche 21a et droit 21b de la première paire peuvent être aussi respectivement montés sur la portion de châssis gauche 13a et la portion de châssis droite 13b, par l'intermédiaire de ladite oreille 23 de la première paire.

En variante (non représentée), le mécanisme d'entraînement 22 est conçu :
- d'une part, pour entraîner en coulissement le bras de suspension gauche 15a de la première paire entre les première et deuxième positions, le bras de suspension gauche 15a étant lui-même conçu pour entraîner en coulissement la portion de châssis gauche 13a entre les première et deuxième positions,
- d'autre part, pour entraîner en coulissement le bras de suspension droit 15b de la première paire entre les première et deuxième positions, le bras de suspension droit 15b étant lui-même conçu pour entraîner en coulissement la portion de châssis droite 13b entre les première et deuxième positions.

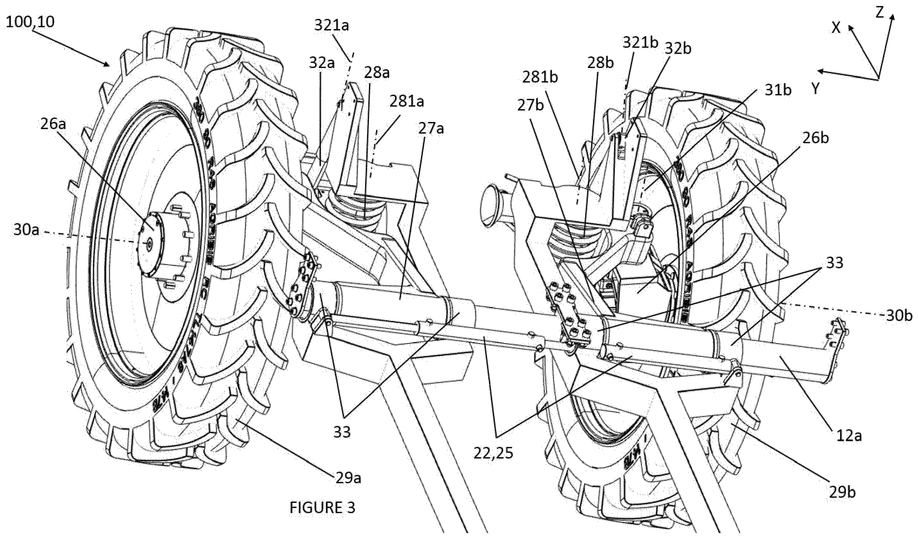

Le mécanisme d'entraînement 22 comprend par exemple une paire de vérins 24, 25 (figures 2 et 3) dont l'un des vérins 24, 25 est monté sur l'une des barres de guidage avant 12a et arrière 12b d'une part, et sur la portion de châssis gauche 13a ou le bras de suspension gauche 15a de la première paire qui est monté sur ladite barre de guidage avant 12a ou arrière 12b d'autre part, et dont l'autre des vérins 24, 25 est monté sur l'une ou l'autre des barres de guidage avant 12a et arrière 12b d'une part, et sur la portion de châssis droite 13b ou le bras de suspension droit 15b de la première paire qui est monté sur ladite barre de guidage avant 12a ou arrière 12b d'autre part. Le montage des vérins 24, 25 peut ainsi être symétrique ou asymétrique par rapport au plan médian, longitudinal et vertical, du châssis à voie variable 100.

Le mécanisme d'entraînement 22 comprend par exemple deux paires de vérins 24, 25 (figures 2 et 3). Les vérins 24 de l'une des paires étant montés sur l'une des barres de guidage avant 12a ou arrière 12b d'une part, et sur la portion de châssis gauche 13a ou le bras de suspension gauche 15a de la première paire qui est monté sur ladite barre de guidage avant 12a ou arrière 12b d'autre part. Les vérins 25 de l'autre des paires sont montés sur l'autre des barres de guidage avant 12a ou arrière 12b d'une part et sur la portion de châssis droite 13b ou le bras de suspension droit 15b de la première paire qui est monté sur ladite barre de guidage avant 12a ou arrière 12b d'autre part. Le montage des vérins 24, 25 de chaque paire est ainsi symétrique par rapport au plan médian, longitudinal et vertical, du châssis à voie variable 100.

En variante (non représentée), le mécanisme d'entraînement 22 comprend un ou plusieurs vérins montés entre les portions de châssis gauche 13a et droite 13b et/ou entre les bras de suspension gauche 15a et droit 15b de la première paire.

Les vérins 24, 25 du mécanisme d'entraînement 22 sont par exemple hydrauliques. Ils peuvent aussi être pneumatiques ou encore électriques.

Le mécanisme d'entraînement 22 est par exemple encore conçu pour entraîner en coulissement la portion de châssis gauche 13a et/ou le bras de suspension gauche 15a de la première paire par rapport aux barres de guidage avant 12a et arrière 12b d'une part, et la portion de châssis droit 13a et/ou le bras de suspension droit 15b de la première paire par rapport aux barres de guidage avant 12a et arrière 12b, de manière symétrique. La portion de châssis gauche 13a et le bras de suspension gauche 15a de la première paire parcourent ainsi la même distance, en sens opposé, que la portion de châssis droite 13a et le bras de suspension droit 15b de la première paire, lorsque les portions de châssis gauche 13a et droite 13b et les bras de suspension gauche 15a et droit 15b de la première paire coulissent le long des barres de guidage avant 12a et arrière 12b entre les première et deuxième positions. Cela permet de s'assurer de la stabilité de l'engin agricole 1000 quelle que soit la configuration de voie du châssis à voie variable 100.

Pour cela, une unité de commande 1001 électronique (figure 10) est par exemple conçue pour commander un même déplacement en coulissement des tiges des vérins 24, 25 de la ou de chaque paire par rapport à un cylindre dudit vérin 24, 25 dans lequel ladite tige est montée coulissante.

L'unité de commande 1001 peut être conçue pour commander un même déplacement en coulissement de la tige d'un des vérins 24, 25 de chaque paire par rapport au cylindre dudit vérin 24, 25, l'un des vérins 24, 25 de chaque paire étant lui-même conçu pour commander, en fonction du déplacement en coulissement de sa tige par rapport à son cylindre, le déplacement en coulissement de la tige de l'autre des vérins 24, 25 de ladite paire par rapport au cylindre dudit autre des vérins 24, 25, les vérins 24, 25 de chaque paire formant ainsi un système maître-esclave.

L'unité de commande 1001 peut commander les vérins 24, 25 soit indirectement via un circuit hydraulique ou pneumatique, lorsqu'ils sont hydrauliques ou pneumatiques, soit directement, lorsqu'ils sont électriques.

Selon un exemple de réalisation de l'invention (figures 1 à 6), l'ensemble 10 du châssis à voie variable 100 comprend aussi une deuxième paire de supports de roue 26a, 26b, une deuxième paire de bras de suspension 27a, 27b et une deuxième paire de systèmes de suspension 28a, 28b.

La deuxième paire de supports de roue 26a, 26b comprend un support de roue gauche 26a sur lequel une deuxième roue gauche 29a est montée rotative, notamment autour d'un deuxième axe de rotation gauche 30a globalement horizontal, et un support de roue droit 26b sur lequel une deuxième roue droite 29b est montée rotative, notamment autour d'un deuxième axe de rotation droit 30b globalement horizontal (figures 1 et 3). Les supports de roue gauche 26a et droit 26b portent par exemple chacun un moteur, électrique ou hydraulique, respectivement destiné à entraîner les deuxièmes roues gauche 29a et droite 29b en rotation autour des deuxièmes axes de rotation gauche 30a et droit 30b.

La deuxième paire de bras de suspension 27a, 27b comprend un bras de suspension gauche 27a et un bras de suspension droit 27b.

Les bras de suspension gauche 27a et droit 27b de la deuxième paire sont montés pivotants sur l'autre des barres de guidage avant 12a ou arrière 12b, autour de l'axe de guidage 17a, 17b de ladite barre de guidage avant 12a ou arrière 12b. Les bras de suspension gauche 27a et droit 27b de la deuxième paire sont en outre montés coulissants sur ladite barre de guidage avant 12a ou arrière 12b suivant l'axe de guidage 17a, 17b de ladite barre de guidage avant 12a ou arrière 12b. Une liaison pivot glissant est ainsi prévue entre chacun des bras de suspension gauche 27a et droit 27b de la deuxième paire et ladite barre de guidage avant 12a ou arrière 12b. Le bras de suspension gauche 27a de la deuxième paire est monté à gauche sur ladite barre de guidage avant 12a ou arrière 12b par rapport au bras de suspension droit 27b de la deuxième paire, tandis que le bras de suspension droit 27b est monté à droite sur ladite barre de guidage avant 12a ou arrière 12b par rapport au bras de suspension gauche 27a. Les bras de suspension gauche 27a et droit 27b de la deuxième paire sont par exemple montées de part et d'autre du plan médian, vertical et longitudinal, du châssis à voie variable 100. Les bras de suspension gauche 27a et droit 27b de la deuxième paire sont ainsi montés pivotants et coulissants sur la même barre de guidage arrière 12b ou avant 12a, qui est différente de celle sur laquelle les bras de suspension gauche 15a et droit 15b de la première paire sont montés.

Les supports de roue gauche 26a et droit 26b de la deuxième paire sont en outre respectivement montés pivotants sur le bras de suspension gauche 27a et le bras de suspension droit 27b de la deuxième paire, autour d'un axe de pivotement 31a, 31b globalement vertical (figure 3).

La deuxième paire de systèmes de suspension 28a, 28b comprend un système de suspension gauche 28a et un système de suspension droit 28b.

Le système de suspension gauche 28a de la deuxième paire est par exemple monté entre le bras de suspension gauche 27a de la deuxième paire et la portion de châssis gauche 13a, en s'étendant suivant un deuxième axe de suspension gauche 281a, tandis que le système de suspension droit 28b de la deuxième paire est monté entre le bras de suspension droit 27b de la deuxième paire et la portion de châssis droit 13b, en s'étendant suivant un deuxième axe de suspension droit 281b (figure 3).

Les systèmes de suspension gauche 28a et droit 28b de la deuxième paire sont en outre conçus pour se comprimer, respectivement suivant le deuxième axe de suspension gauche 281a, le bras de suspension gauche 27a de la deuxième paire se rapprochant de la portion de châssis gauche 13a, et suivant le deuxième axe de suspension droit 281b, le bras de suspension droit 27b de la deuxième paire se rapprochant de la portion de châssis droite 15b, et pour se détendre, respectivement suivant le deuxième axe de suspension gauche 281a, le bras de suspension gauche 27a s'écartant de la portion de châssis gauche 13a, et suivant le deuxième axe de suspension droit 281b, le bras de suspension droit 27b s'écartant de la portion de châssis droite 15b.

En variante (figure 5), le système de suspension gauche 28a de la deuxième paire est monté entre le bras de suspension gauche 27a de la deuxième paire et le châssis principal 11, en s'étendant suivant un deuxième axe de suspension gauche 281a, tandis que le système de suspension droit 28b de la deuxième paire est monté entre le bras de suspension droit 27b de la deuxième paire et le châssis principal 11, en s'étendant suivant un deuxième axe de suspension droit 281b.

Les systèmes de suspension gauche 28a et droit 28b de la deuxième paire sont en outre conçus pour se comprimer, respectivement suivant le deuxième axe de suspension gauche 281a, le bras de suspension gauche 27a de la deuxième paire se rapprochant du châssis principal 11, et suivant le deuxième axe de suspension droit 281b, le bras de suspension droit 27b de la deuxième paire se rapprochant du châssis principal 11, et pour se détendre, respectivement suivant le deuxième axe de suspension gauche 281a, le bras de suspension gauche 27a s'écartant du châssis principal 11, et suivant le deuxième axe de suspension droit 281b, le bras de suspension droit 27b s'écartant du châssis principal 11.

De cette manière, les portions de châssis gauche 13a et droite 13b, les bras de suspension gauche 15a et droit 15b de la première paire et les bras de suspension gauche 27a et droit 27b de la deuxième paire sont aptes à se déplacer en translation par rapport aux barres de guidage avant 12a et arrière 12b, globalement suivant la direction transversale Y, pour faire varier une distance transversale entre les supports de roue gauche 14a et droit 14b de la première paire et entre les supports de roue gauche 26a et droit 26b de la deuxième paire, et donc entre les premières roues gauche 18a et droite 18b et entre les deuxièmes roues gauche 29a et droite 29b, et ainsi permettre les différentes configurations de voie du châssis à voie variable 100.

Dans la configuration de voie étroite (figures 1 et 5), les portions de châssis gauche 13a et droite 13b sont transversalement au plus proches l'une de l'autre, les bras de suspension gauche 15a et droit 15b de la première paire sont transversalement au plus proches l'un de l'autre et les bras de suspension gauche 27a et droit 27b de la deuxième paire sont transversalement au plus proches l'un de l'autre, de sorte que d'une part, la distance transversale entre les supports de roue gauche 14a et droit 14b de la première paire et donc entre les premières roues gauche 18a et droite 18b est la plus faible, et d'autre part la distance transversale entre les supports de roue gauche 26a et droit 26b de la deuxième paire et donc entre les deuxièmes roues gauche 29a et droite 29b est la plus faible. Au contraire, dans la configuration de voie large, les portions de châssis gauche 13a et droite 13b sont transversalement les plus éloignées l'une de l'autre, les bras de suspension gauche 15a et droit 15b de la première paire sont transversalement les plus éloignés l'un de l'autre et les bras de suspension gauche 27a et droit 27b de la deuxième paire sont transversalement les plus éloignés l'un de l'autre, de sorte que d'une part, la distance transversale entre les supports de roue gauche 14a et droit 14b de la première paire et donc entre les premières roues gauche 18a et droite 18b est la plus élevée, et d'autre part, la distance transversale entre les supports de roue gauche 26a et droit 26b de la deuxième paire et donc entre les deuxièmes roues gauche 29a et droite 29b est la plus élevée. Toute configuration intermédiaire (figures 2 à 4 et 6) entre les configurations de voie étroite et de voie large est aussi permise.

Par ailleurs, le montage des bras de suspension gauche 15a, 27a et droit 15b, 27b des première et deuxième paires, des supports de roue gauche 14a, 26a et droit 14b, 26b des première et deuxième paires, ainsi que des systèmes de suspension gauche 16a, 28a et droit 16b, 28b des première et deuxième paires permet d'obtenir une suspension indépendante pour chacune des premières et deuxièmes roues gauche 18a, 29a et droite 18b, 29b et donc d'améliorer la tenue de route de l'engin agricole 1000 quelle que soit la configuration de voie du châssis à voie variable 100.

L'ensemble 10 du châssis à voie variable 100 comprend par exemple aussi une deuxième paire d'amortisseurs 32a, 32b comprenant un amortisseur gauche 32a et un amortisseur droit 32b (figures 3 et 5).

L'amortisseur gauche 32a de la deuxième paire est par exemple monté entre le bras de suspension gauche 27a de la deuxième paire et la portion de châssis gauche 13a, en s'étendant suivant un deuxième axe d'amortissement gauche 321a, tandis que l'amortisseur droit 32b de la deuxième paire est monté entre le bras de suspension droit 27b de la deuxième paire et la portion de châssis droit 13b, en s'étendant suivant un deuxième axe d'amortissement droit 321b (figures 1 à 4 et 6).

En variante (figure 5), l'amortisseur gauche 32a de la deuxième paire est monté entre le bras de suspension gauche 27a de la deuxième paire et le châssis principal 11, en s'étendant suivant un deuxième axe d'amortissement gauche 321a, tandis que l'amortisseur droit 32b de la deuxième paire est monté entre le bras de suspension droit 27b de la deuxième paire et le châssis principal 11, en s'étendant suivant un deuxième axe d'amortissement droit 321b.

L'amortisseur gauche 32a et l'amortisseur droit 32b de la deuxième paire sont respectivement conçus pour amortir une compression et une détente du système de suspension gauche 28a et du système de suspension droit 28b de la deuxième paire, et donc un déplacement du bras de suspension gauche 27a de la deuxième paire par rapport à la portion de châssis gauche 13a ou au châssis principal 11 et un déplacement du bras de suspension droit 27b de la deuxième paire par rapport à la portion de châssis droit 13b ou au châssis principal 11.

Le système de suspension gauche 28a de la deuxième paire et l'amortisseur gauche 32a de la deuxième paire peuvent être montés indépendamment l'un de l'autre ou encore de manière séparée entre le bras de suspension gauche 27a de la deuxième paire et la portion de châssis gauche 13a ou le châssis principal 11 (figures 1, 3, 4 et 6), chacun du système de suspension gauche 28a et de l'amortisseur gauche 32a étant monté directement sur le bras de suspension gauche 27a d'une part, et sur la portion de châssis gauche 13a ou le châssis principal 11 d'autre part. Le deuxième axe de suspension gauche 281a et le deuxième axe d'amortissement gauche 321a ne sont pas confondus.

Le système de suspension gauche 28a et l'amortisseur gauche 32a peuvent en revanche être montés ensemble entre le bras de suspension gauche 27a de la deuxième paire et la portion de châssis gauche 13a ou le châssis principal 11 (figure 5), le deuxième axe de suspension gauche 281a et le deuxième axe d'amortissement gauche 321a étant confondus.

Il en est de même du système de suspension droit 28b de la deuxième paire et de l'amortisseur droit 32b de la deuxième paire, qui peuvent être montés indépendamment ou ensemble entre le bras de suspension droit 27b de la deuxième paire et la portion de châssis droite 13b ou le châssis principal 11.

Le mécanisme d'entraînement 22 peut encore être conçu :
- d'une part, pour entraîner en coulissement la portion de châssis gauche 13a, le bras de suspension gauche 15a de la première paire et le bras de suspension gauche 27a de la deuxième paire par rapport aux barres de guidage avant 12a et arrière 12b, suivant les axes de guidage 17a, 17b, entre une première position et une deuxième position dans laquelle la portion de châssis gauche 13a et lesdits bras de suspension gauches 15a, 27a sont chacun situés plus à gauche que dans la première position,
- d'autre part, pour entraîner en coulissement la portion de châssis droite 13b, le bras de suspension droit 15b de la première paire et le bras de suspension droit 27b de la deuxième paire par rapport aux barres de guidage avant 12a et arrière, suivant les axes de guidage 17a, 17b, entre une première position et une deuxième position dans laquelle la portion de châssis droite 13b et lesdits bras de suspension droits 15b, 27b sont chacun situés plus à droite que dans la première position.

Lorsque les portions de châssis gauche 13a et droite 13b et les bras de suspension gauche 15a, 27a et droit 15b, 27b des première et deuxième paires occupent leur première position, le châssis à voie variable 100 est dans la configuration de voie étroite (figures 1 et 5). Au contraire, lorsque les portions de châssis gauche 13a et droite 13b et les bras de suspension gauche 15a, 27a et droit 15b, 27b des première et deuxième paires occupent leur deuxième position, le châssis à voie variable 100 est dans la configuration de voie large.

Les portions de châssis gauche 13a et droite 13b et les bras de suspension gauche 15a, 27a et droit 15b, 27b des première et deuxième paires peuvent en outre occuper toute position entre les première et deuxième positions. Les figures 2, 3, 4, 6, 8 et 9 montrent la portion de châssis gauche 13a, le bras de suspension gauche 15a de la première paire et le bras de suspension gauche 27a de la deuxième paire dans leur première position, et la portion de châssis droite 13b, le bras de suspension droit 15b de la première paire et le bras de suspension droit 27b de la deuxième paire dans leur deuxième position.

Le mécanisme d'entraînement 22 est par exemple conçu :
- d'une part, pour entraîner en coulissement la portion de châssis gauche 13a entre les première et deuxième positions, la portion de châssis gauche 13a étant elle-même conçue pour entraîner en coulissement le bras de suspension gauche 15a de la première paire et le bras de suspension gauche 27a de la deuxième paire entre les première et deuxième positions,
- d'autre part, pour entraîner en coulissement la portion de châssis droite 13b entre les première et deuxième positions, la portion de châssis droite 13b étant elle-même conçue pour entraîner en coulissement le bras de suspension droit 15b de la première paire et le bras de suspension droit 27b de la deuxième paire entre les première et deuxième positions.

De cette manière, les bras de suspension gauches 15a, 27a des première et deuxième paires et les bras de suspension droits 15b, 27b des première et deuxième paires sont respectivement solidaires en coulissement des portions de châssis gauche 13a et droit 13b. Cela permet de simplifier le montage du mécanisme d'entraînement 22.

Chacune des portions de châssis gauche 13a et droite 13b comprend par exemple, en plus de la première paire d'oreilles 23 déjà décrite, une deuxième paire d'oreilles 33 par l'intermédiaire desquelles ladite portion de châssis gauche 13a ou droite 13b est montée coulissante sur la même barre de guidage avant 12a ou arrière 12b que les bras de suspension gauche 27a et droit 27b de la deuxième paire (figure 3). Les oreilles 33 de la deuxième paire de chacune des portions de châssis gauche 13a et droite 13b sont en outre décalés l'une par rapport à l'autre suivant l'axe de guidage 17a, 17b de ladite barre de guidage avant 12a ou arrière 12b, de manière à définir un espace libre entre lesdites oreilles 33. Chacun des bras de suspension gauche 27a et droit 27b de la deuxième paire est en outre monté coulissant sur ladite barre de guidage 12a ou arrière 12b, entre les oreilles 33 de la deuxième paire de la portion de châssis gauche 13a ou droite 13b qui l'entraîne en coulissement, dans l'espace libre défini entre lesdites oreilles 33. Les portions de châssis gauche 13a et droite 13b entraînent ainsi respectivement le bras de suspension gauche 27a et le bras de suspension droit 27b de la deuxième paire par l'intermédiaire de leur deuxième paire d'oreilles 33.

Les systèmes de suspension gauche 28a et droit 28b de la deuxième paire sont par exemple respectivement montés sur la portion de châssis gauche 13a et la portion de châssis droite 13b, par l'intermédiaire de l'une des oreilles 33 de la deuxième paire de ladite portion de châssis gauche 13a ou droite 13b, ladite oreille 33 se prolongeant depuis la barre de guidage avant 12a ou arrière 12b sur laquelle ladite oreille 23 est montée, vers le support de roue gauche 26a ou droit 26b de la deuxième paire. Les amortisseurs gauche 32a et droit 32b de la deuxième paire peuvent être aussi respectivement montés sur la portion de châssis gauche 13a et la portion de châssis droite 13b, par l'intermédiaire de ladite oreille 33 de la deuxième paire.

En variante (non représentée), le mécanisme d'entraînement 22 est conçu :
- pour entraîner en coulissement le bras de suspension gauche 15a de la première paire entre les première et deuxième positions, ledit bras de suspension gauche 15a étant lui-même conçu pour entraîner en coulissement la portion de châssis gauche 13a entre les première et deuxième positions,
- pour entraîner en coulissement le bras de suspension droit 15b de la première paire entre les première et deuxième positions, le bras de suspension droit 15b étant lui-même conçu pour entraîner en coulissement la portion de châssis droite 13b entre les première et deuxième positions,
- pour entraîner en coulissement le bras de suspension gauche 27a de la deuxième paire entre les première et deuxième positions, ledit bras de suspension gauche 27a étant lui-même conçu pour entraîner en coulissement la portion de châssis gauche 13a entre les première et deuxième positions, et
- pour entraîner en coulissement le bras de suspension droit 27b de la deuxième paire entre les première et deuxième positions, ledit bras de suspension droit 27b étant lui-même conçu pour entraîner en coulissement la portion de châssis droite 13b entre les première et deuxième positions.

Le mécanisme d'entraînement 22 comprend par exemple au moins une paire de vérins 24, 25 (figures 1 et 2). L'un des vérins 24, 25 est monté sur l'une des barres de guidage avant 12a et arrière 12b d'une part, et sur la portion de châssis gauche 13a ou le bras de suspension gauche 15a, 27a de la première ou de la deuxième paire qui est monté sur ladite barre de guidage avant 12a ou arrière 12b d'autre part. L'autre des vérins 24, 25 est monté sur l'une ou l'autre des barres de guidage avant 12a et arrière 12b d'une part, et sur la portion de châssis droite 13b ou le bras de suspension droit 15b, 27b de la première ou de la deuxième paire qui est monté ladite barre de guidage avant 12a ou arrière 12b d'autre part. Le montage des vérins 24, 25 de la ou de chaque paire peut ainsi être symétrique ou asymétrique par rapport au plan médian, longitudinal et vertical, du châssis à voie variable 100.

Le mécanisme d'entraînement 22 comprend par exemple deux paires de vérins 24, 25. L'un des vérins 24 d'une première paire est monté sur l'une des barres de guidage avant 12a et arrière 12b d'une part, et sur la portion de châssis gauche 13a ou le bras de suspension gauche 15a, 27a de la première paire ou de la deuxième paire qui est monté sur ladite barre de guidage avant 12a ou arrière 12b d'autre part. L'autre des vérins 24 de la première paire est monté sur ladite barre de guidage avant 12a ou arrière 12b d'une part, et sur la portion de châssis droite 13b ou le bras de suspension droit 15a, 27a de la première paire ou de la deuxième paire qui est monté sur ladite barres de guidage avant 12a ou arrière 12b d'autre part. L'un des vérins 25 d'une deuxième paire est monté sur l'autre des barres de guidage avant 12a et arrière 12b d'une part, et sur la portion de châssis gauche 13a ou le bras de suspension gauche 15a, 27a de la première paire ou de la deuxième paire qui est monté sur ladite barre de guidage avant 12a ou arrière 12b d'autre part, tandis que l'autre des vérins 25 de la deuxième paire est monté sur ladite barre de guidage avant 12a ou arrière 12b d'une part, et sur la portion de châssis droite 13b ou le bras de suspension droit 15a, 27a de la première paire ou de la deuxième paire qui est monté sur ladite barre de guidage avant 12a ou arrière 12b d'autre part. Le montage des vérins 24, 25 est ainsi symétrique par rapport au plan médian, longitudinal et vertical, du châssis à voie variable 100.

En variante (non représentée), le mécanisme d'entraînement 22 comprend un ou plusieurs vérins montés entre les portions de châssis gauche 13a et droite 13b et/ou entre les bras de suspension gauche 15a et droit 15b de la première paire et/ou entre les bras de suspension gauche 27a et droit 27b de la deuxième paire.

Le mécanisme d'entraînement 22 est par exemple encore conçu pour entraîner en coulissement la portion de châssis gauche 13a et/ou le bras de suspension gauche 15a de la première paire et/ou le bras de suspension droit 27a de la deuxième paire par rapport aux barres de guidage avant 12a et arrière 12b d'une part, et la portion de châssis droite 13a et/ou le bras de suspension droit 15b de la première paire et/ou le bras de suspension droit 27b de la deuxième paire par rapport aux barres de guidage avant 12a et arrière 12b, de manière symétrique. La portion de châssis gauche 13a et les bras de suspension gauches 15a, 27a des première et deuxième paires parcourent ainsi la même distance, en sens opposé, que la portion de châssis droite 13a et les bras de suspension droits 15b, 27a des première et deuxième paires, lorsque les portions de châssis gauche 13a et droite 13b et les bras de suspension gauches 15a, 27a et droits 15b, 27b coulissent le long des barres de guidage avant 12a et arrière 12b entre les première et deuxième positions. Cela permet de s'assurer de la stabilité de l'engin agricole 1000 quelle que soit la configuration de voie du châssis à voie variable 100.

Pour cela, une unité de commande 1001 électronique (figure 10) est par exemple conçue pour commander un même déplacement en coulissement des tiges des vérins 24, 25 de la ou de chaque paire par rapport à un cylindre dudit vérin 24, 25 dans lequel ladite tige est montée coulissante.

L'unité de commande 1001 peut être conçue pour commander un même déplacement en coulissement de la tige d'un des vérins 24, 25 de chaque paire par rapport au cylindre dudit vérin, l'un des vérins 24, 25 de chaque paire étant lui-même conçu pour commander, en fonction du déplacement en coulissement de sa tige par rapport à son cylindre, le déplacement en coulissement de la tige de l'autre des vérins 24, 25 de ladite paire par rapport au cylindre dudit autre des vérins 24, 25, les vérins 24, 25 de chaque paire formant ainsi un système maître-esclave.

L'unité de commande 1001 peut commander les vérins 24, 25 soit indirectement via un circuit hydraulique ou pneumatique, lorsqu'ils sont hydrauliques ou pneumatiques, soit directement, lorsqu'ils sont électriques.

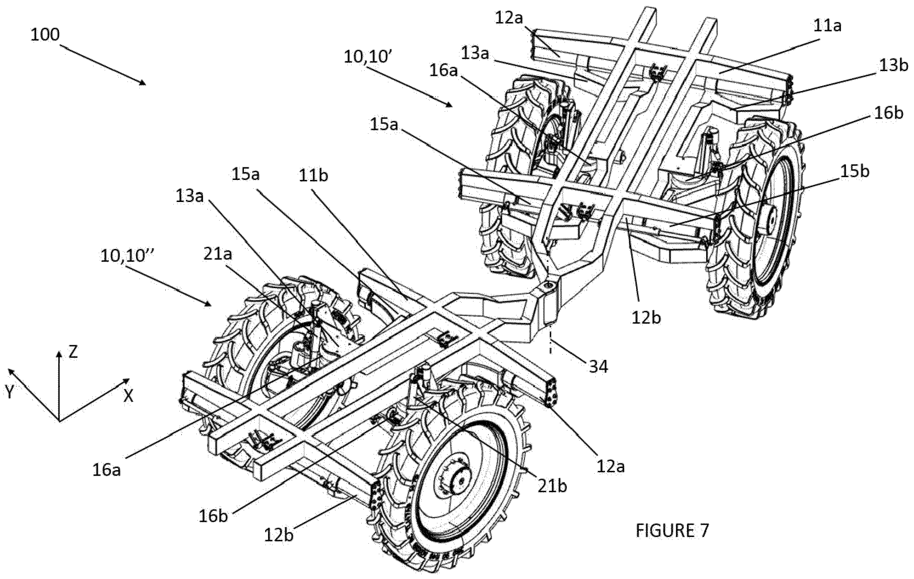

Selon un autre exemple de réalisation de l'invention (figure 7), le châssis principal 11 comprend une partie de châssis avant 11a et une partie de châssis arrière 11b articulée sur la partie de châssis avant 11a autour d'un axe d'articulation 34 sensiblement vertical. Les parties de châssis avant 11a et arrière 11b sont décalées l'une par rapport à l'autre suivant la direction longitudinale X, la partie de châssis avant 11a étant décalée par rapport à la partie de châssis arrière 11b vers l'avant. L'axe d'articulation 34 est en outre longitudinalement interposé entre les parties de châssis avant 11a et arrière 11b.

Le châssis à voie variable 100 comprend en outre deux ensembles 10, référencés 10' et 10" (figure 7), chacun des ensembles 10, 10', 10" comprenant les barres de guidage avant 12a et arrière 12b, les portions de châssis gauche 13a et droite 13b, la première paire de supports de roue 14a, 14b, la première paire de bras de suspension 15a, 15b, la première paire de systèmes de suspension 16a, 16b et, le cas échéant, les premières roues gauche 18a et droite 18b et/ou la première paire d'amortisseurs 21a, 21b et/ou le mécanisme d'entraînement 22. Bien sûr, dans ce cas, les orientations longitudinale et transversale données pour chacun de ces composants 13a, 13b, 14a, 14b, 15a, 15b, 16a, 16b, 18a, 18b, 21a, 21b, 22 sont à considérer lorsque la partie de châssis avant 11a et la partie de châssis 11b sont longitudinalement alignées l'une avec l'autre, leurs barres de guidage avant 12a et arrière 12b étant alors toutes orientées transversalement.

Les ensembles 10, 10', 10" peuvent mettre en oeuvre les mêmes variantes de réalisation ou des variantes de réalisation différentes.

Les barres de guidage avant 12a et arrière 12b de l'un des ensembles 10, 10', 10" sont fixées sur l'une des parties de châssis avant 11a et arrière 11b du châssis principal 11, tandis que les barres de guidage avant 12a et arrière 12b de l'autre des ensembles 10, 10', 10" sont fixées sur l'autre des parties de châssis avant 11a et arrière 11b du châssis principal 11. La partie de châssis avant 11a est par exemple fixées en deux points sur chacune des barres de guidage avant 12a et arrière 12b de l'un des ensembles 10, 10', 10", notamment aux extrémités de chacune desdites barres de guidage avant 12a et arrière 12b. La partie de châssis arrière 11b est par exemple fixées en deux points sur chacune des barres de guidage avant 12a et arrière 12b de l'autre des ensembles 10, 10', 10", notamment aux extrémités de chacune desdites barres de guidage avant 12a et arrière 12b.

Le cas échéant, les systèmes de suspension gauche 16a et droit 16b de la première paire de l'un des ensembles 10, 10', 10" sont respectivement montés entre les bras de suspension gauche 15a et droit 15b de la première paire de l'un des ensembles 10, 10', 10" et l'une des parties de châssis avant 11a et arrière 11b du châssis principal 11, en s'étendant respectivement suivant le premier axe de suspension gauche 161a et le premier axe de suspension droit 161b, tandis que les systèmes de suspension gauche 16a et droit 16b de la première paire de l'autre des ensembles 10, 10', 10" sont respectivement montés entre les bras de suspension gauche 15a et droit 15b de la première paire de l'autre des ensembles 10, 10', 10" et l'autre des parties de châssis avant 11a et arrière 11b du châssis principal 11, en s'étendant respectivement suivant le premier axe de suspension gauche 161a et le premier axe de suspension droit 161b.

Le cas échéant, les amortisseurs gauche 21a et droit 21b de la première paire de l'un des ensembles 10 sont respectivement montés entre le bras de suspension gauche 15a et droit 15b de la première paire de l'un des ensembles 10, 10', 10" et l'une des parties de châssis avant 11a et arrière 11b du châssis principal 11, en s'étendant suivant leur premier axe d'amortissement gauche 211a et droit 211b, tandis que les amortisseurs gauche 21a et droit 21b de la première paire de l'autre des ensembles 10, 10', 10" sont respectivement montés entre le bras de suspension gauche 15a et droit 15b de la première paire de l'autre des ensembles 10, 10', 10" et l'autre des parties de châssis avant 11a et arrière 11b du châssis principal 11, en s'étendant suivant leur premier axe d'amortissement gauche 211a et droit 211b.

Les deux ensembles 10, 10', 10" fonctionnent ainsi de la même manière. Les portions de châssis gauche 13a et droite 13b de chaque ensemble 10, 10', 10" et les bras de suspension gauche 15a et 15b de chaque ensemble 10, 10', 10" sont aptes à se déplacer en translation par rapport aux barres de guidage avant 12a et arrière 12b de chaque ensemble 10, 10', 10", globalement suivant la direction transversale Y, pour faire varier une distance transversale entre les supports de roue gauche 14a et droit 14b de chaque ensemble 10, 10', 10" et donc entre les premières roues gauche 18a et droite 18b de chaque ensemble 10, 10', 10" et ainsi permettre les différentes configurations de voie du châssis à voie variable 100.

Par ailleurs, le montage des bras de suspension gauche 15a et droit 15b de chaque ensemble 10, 10', 10", des supports de roue gauche 14a et droit 14b de chaque ensemble 10, 10', 10", ainsi que des systèmes de suspension gauche 16a et droit 16b de chaque ensemble 10, 10', 10" permet d'obtenir une suspension indépendante pour chacune des premières roues gauche 18a et droite 18b des ensembles 10, 10', 10" et donc d'améliorer la tenue de route de l'engin agricole 1000 quelle que soit la configuration de voie du châssis à voie variable 100.

Chacun des ensembles 10, 10', 10" peut encore comprendre la deuxième paire de supports de roue 26a, 26b, la deuxième paire de bras de suspension 27a, 27b, la deuxième paire de systèmes de suspension 28a, 28b et, le cas échéant, les deuxièmes roues gauche 29a et droite 29b et/ou la deuxième paire d'amortisseurs 32a, 32b, de manière à obtenir un châssis à voie variable 100 pour engin agricole 1000 à huit roues. Bien sûr, dans ce cas aussi, les orientations longitudinale et transversale données pour chacun de ces composants 26, 26a, 27a, 27b, 28a, 28b, 29a, 29b, 32a, 32b sont à considérer lorsque la partie de châssis avant 11a et la partie de châssis 11b sont longitudinalement alignées l'une avec l'autre, leurs barres de guidage avant 12a et arrière 12b étant alors toutes orientées transversalement.

Le cas échéant, les systèmes de suspension gauche 28a et droit 28b de la deuxième paire de l'un des ensembles 10, 10', 10" sont respectivement montés entre les bras de suspension gauche 27a et droit 27b de la deuxième paire de l'un des ensembles 10, 10', 10" et l'une des parties de châssis avant 11a et arrière 11b du châssis principal 11, en s'étendant respectivement suivant le deuxième axe de suspension gauche 281a et le deuxième axe de suspension droit 281b, tandis que les systèmes de suspension gauche 28a et droit 28b de la deuxième paire de l'autre des ensembles 10, 10', 10" sont respectivement montés entre les bras de suspension gauche 27a et droit 27b de la deuxième paire de l'autre des ensembles 10, 10', 10" et l'autre des parties de châssis avant 11a et arrière 11b du châssis principal 11, en s'étendant respectivement suivant le deuxième axe de suspension gauche 281a et le deuxième axe de suspension droit 281b.

Le cas échéant, les amortisseurs gauche 32a et droit 32b de la deuxième paire de l'un des ensembles 10, 10', 10" sont respectivement montés entre les bras de suspension gauche 27a et droit 27b de la deuxième paire de l'un des ensembles 10, 10', 10" et l'une des parties de châssis avant 11a et arrière 11b du châssis principal 11, en s'étendant suivant leur deuxième axe d'amortissement gauche 321a et droit 321b, tandis que les amortisseurs gauche 32a et droit 32b de la deuxième paire de l'autre des ensembles 10, 10', 10" sont respectivement montés entre les bras de suspension gauche 27a et droit 27b de la deuxième paire de l'autre des ensembles 10 et l'autre des parties de châssis avant 11a et arrière 11b du châssis principal 11, en s'étendant suivant leur axe d'extension gauche 322a et droit 322b.

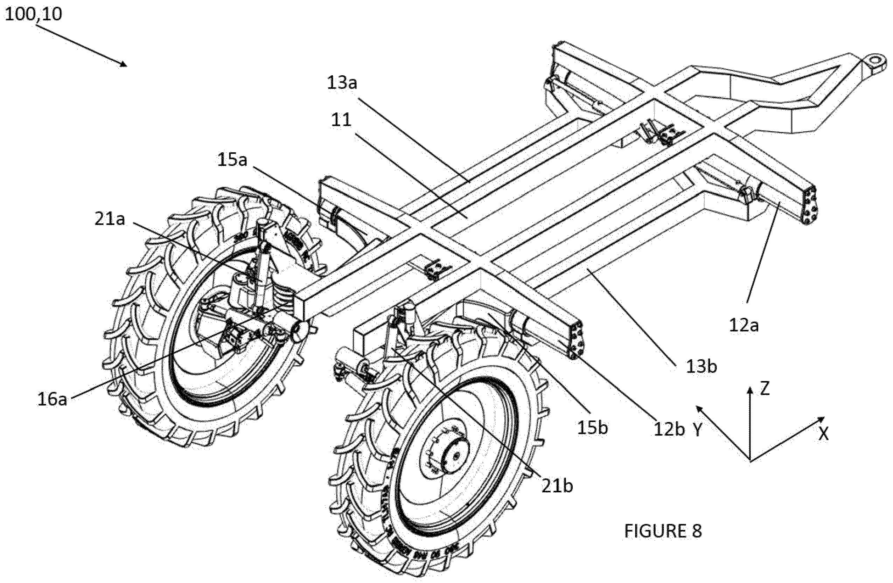

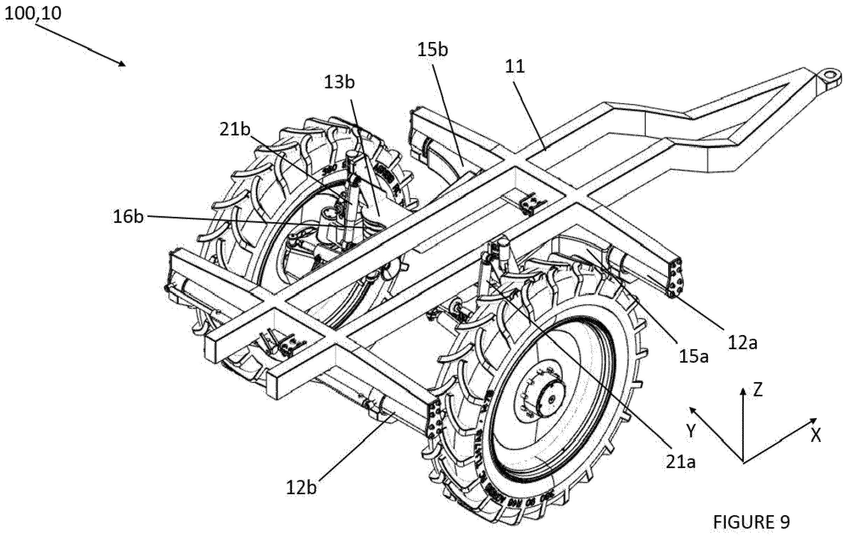

Les barres de guidage avant 12a et arrière 12b de l'ensemble 10 ou de chaque ensemble 10, 10', 10" sont par exemple longitudinalement agencées de chaque côté des supports de roue gauche 14a et droit 14b de la première paire (figures 7 et 9). En variante (figure 8), les barres de guidage avant 12a et arrière 12b sont longitudinalement agencées du même côté des supports de roue gauche 14a et droit 14b de la première paire, par exemple à l'avant desdits supports de roue gauche 14a et droit 14b. Encore en variante (figures 1 à 6), les barres de guidage avant 12a et arrière 12b sont longitudinalement agencées entre les supports de roue gauche 14a et droit 14b de la première paire et les supports de roue gauche 26a et droit 26b de la deuxième paire. Encore en variante (non représentée), les barres de guidage avant 12a et arrière 12b sont longitudinalement agencées de chaque côté des supports de roue gauche 14a, 26a et droit 14b, 26b des première et deuxième paires, les supports de roue gauche 14a, 26a et droit 14b, 26b des première et deuxième paires étant ainsi interposés entre les barres de guidage avant 12a et arrière 12b. Encore en variante (non représentée), l'une des barres de guidage avant 14a et arrière 14b est agencée entre les supports de roue gauche 14a, 26a et droit 14b, 26b des première et deuxième paires, tandis que l'autre des barres de guidage avant 12a et arrière 12b est agencée devant ou derrière les supports de roue gauche 14a, 26a et droit 14b, 26b des première et deuxième paires.

Le ou l'un au moins des ensembles 10, 10', 10" du châssis à voie variable 100 peut encore comprendre un premier dispositif d'anti-basculement 35 apte à solidariser en pivotement le bras de suspension gauche 15a et le bras de suspension droit 15b de la première paire ou le bras de suspension gauche 27a et le bras de suspension droit 27b de la deuxième paire par rapport à la barre de guidage avant 12a ou arrière 12b sur laquelle lesdits bras de suspension gauche 15a, 27a et droit 15b, 27a sont montés, lorsque lesdits bras de suspension gauche 15a, 27a et droite 15b, 27a occupent chacun leur première position (figure 2).

Le premier dispositif d'anti-basculement 35 permet ainsi de synchroniser le pivotement des bras de suspension gauche 15a et droit 15b de la première paire ou des bras de suspension gauche 27a et droit 27b de la deuxième paire par rapport à la barre de guidage avant 12a ou arrière 12b sur laquelle ils sont montés, et ainsi de supprimer l'indépendance de la suspension des premières roues gauche 18a et droite 18 ou des deuxièmes roues gauche 29a et droite 29b, lorsque le châssis à voie variable 100 est en configuration de voie étroite. Cette synchronisation en configuration de voie étroite du châssis à voie variable permet d'éviter un basculement de l'engin agricole 1000, lorsqu'il roule dans un dévers, les premières roues gauche 18a et droite 18b et/ou les deuxièmes roues gauche 29a et droite 29b n'étant pas à la même hauteur l'une de l'autre, ou encore lorsqu'il roule à vitesse élevée autour d'un rond-point.

Le ou l'un au moins des ensembles 10, 10', 10" du châssis à voie variable 100 peut comprendre deux premiers dispositifs d'anti-basculement 35, l'un des premiers dispositifs d'anti-basculement 35 étant apte à solidariser en pivotement le bras de suspension gauche 15a et le bras de suspension droit 15b de la première paire par rapport à la barre de guidage avant 12a ou arrière 12b sur laquelle lesdits bras de suspension gauche 15a et droit 15b de la première paire sont montés, l'autre des premiers dispositifs d'anti-basculement 35 étant apte à solidariser en pivotement le bras de suspension gauche 27a et le bras de suspension droit 27b de la deuxième paire par rapport à la barre de guidage avant 12a ou arrière 12b sur laquelle lesdits bras de suspension gauche 27a et droit 27a de la deuxième paire sont montés, lorsque lesdits bras de suspension gauche 15a, 27a et droite 15b, 27a occupent chacun leur première position.

Pour cela, le ou chaque premier dispositif d'anti-basculement 35 comprend une pièce femelle d'accouplement 36 portée par l'un parmi le bras de suspension gauche 15a et le bras de suspension droit 15b de la première paire ou le bras de suspension gauche 27a et le bras de suspension droit 27b de la deuxième paire, et une pièce mâle d'accouplement 37 portée par l'autre parmi le bras de suspension gauche 15a et le bras de suspension droit 15b de la première paire ou le bras de suspension gauche 27a et le bras de suspension droit 27b de la deuxième paire.

La pièce femelle d'accouplement 36 comprend une ouverture 38 s'étendant autour d'un axe d'accouplement 39, globalement transversal, parallèle aux axes de guidage 17a, 17b des barres de guidage avant 12a et arrière 12b et donnant en outre accès à un logement.

La pièce mâle d'accouplement 37 comprend un doigt 40 s'étendant suivant l'axe d'accouplement 39, ledit doigt 40 étant apte à s'introduire dans le logement de la pièce femelle d'accouplement 36, par l'ouverture 38, lorsque les bras de suspension gauche 15a et droit 15b de la première paire coulissent depuis leur deuxième position vers leur première position ou qu'ils occupent chacun leur première position.

Ainsi, soit le pivotement des bras de suspension gauche 15a, 27a et droit 15b, 27b de la première paire ou de la deuxième paire est synchronisé dès que le châssis à voie variable 100 est en configuration de voie étroite, soit cette synchronisation peut être activée, en introduisant le doigt 40 dans le logement, et désactivée, en retirant le doigt 40 du logement, lorsque le châssis à voie variable 100 est en configuration de voie étroite.

La pièce mâle d'accouplement 37 comprend par exemple un actionneur 41 conçu pour entraîner le doigt 40 en translation suivant l'axe d'accouplement 39, par rapport au bras de suspension gauche 15a, 27a ou droit 15b, 27b de la première ou de la deuxième paire qui porte la pièce mâle d'accouplement 37, entre une position active dans laquelle le doigt 40 occupe le logement de la pièce femelle d'accouplement 36 et une position inactive dans laquelle le doigt 40 libère le logement de la pièce femelle d'accouplement 36, lorsque les bras de suspension gauche 15a, 27a et droite 15b, 27b de la première paire ou des première et deuxième paires occupent chacun leur première position.

Le doigt 40 est par exemple lui-même monté coulissant, suivant l'axe d'accouplement 39, dans un manchon 411 formé dans le bras de suspension gauche 15a, 27a ou droit 15b, 27b de la première ou de la deuxième paire qui porte la pièce mâle d'accouplement 37.

L'actionneur 41 est par exemple formé par un vérin comprenant une tige et un cylindre. La tige, qui forme le doigt 40 ou sur laquelle le doigt 40 est monté, est conçue pour coulisser dans le cylindre monté sur le bras de suspension gauche 15a, 27a ou droit 15b, 27b de la première ou de la deuxième paire portant la pièce mâle d'accouplement 37, suivant l'axe d'accouplement 39, entre une position rentrée dans laquelle le doigt 40 occupe la position inactive et une position sortie dans laquelle le doigt 40 occupe la position active et une extrémité de la tige opposée au cylindre est plus éloignée qu'en position rentrée, lorsque les bras de suspension gauche 15a, 27a et droite 15b, 15a de la première ou de la deuxième paire occupent chacun leur première position.

Le vérin formant l'actionneur 41 de la pièce mâle d'accouplement 37 est par exemple hydraulique. Il peut aussi être pneumatique ou encore électrique.

Une unité de commande 1001 électronique (figure 10) est par exemple conçue pour commander l'actionneur 41 de déplacer en translation le doigt 40 entre les positions active et inactive, notamment en commandant le déplacement en coulissement de la tige par rapport au cylindre du vérin formant l'actionneur 41 de la pièce mâle d'accouplement 37 entre les positions sortie et rentrée. L'unité de commande 1001 peut commander le vérin formant l'actionneur 41 soit indirectement via un circuit hydraulique ou pneumatique, lorsqu'il est hydraulique ou pneumatique, soit directement, lorsqu'il est électrique.

L'unité de commande 1001 peut en outre être conçue pour commander l'actionneur 41 de déplacer en translation le doigt 40 de la position inactive à la position active et de la position active à la position inactive, notamment en commandant le déplacement en coulissement de la tige par rapport au cylindre du vérin formant l'actionneur 41 de la pièce mâle d'accouplement 37 de la position rentrée à la position sortie et de la position sortie à la position rentrée, lorsque l'unité de commande 1001 reçoit une commande envoyée par l'agriculteur via une interface utilisateur 1002 reliée à l'unité de commande 1001 (figure 10). L'interface utilisateur 1002 est par exemple agencée dans la cabine conducteur de l'engin agricole 1000.

L'unité de commande 1001 peut encore être conçue pour commander l'actionneur 41 de déplacer le doigt 40 de la position inactive à la position active, notamment en commandant le déplacement en coulissement de la tige par rapport au cylindre du vérin formant l'actionneur 41 de la pièce mâle d'accouplement 37 de la position rentrée à la position sortie, lorsqu'un inclinomètre 1003 (figure 10) monté sur l'engin agricole 1000, par exemple sur le châssis à voie variable 100, mesure un angle d'inclinaison entre la direction vertical Z et une direction de la force de gravité appliquée à l'engin agricole 1000, supérieure ou égale à un premier angle d'inclinaison prédéterminé, et pour commander l'actionneur 41 de déplacer le doigt 40 de la position active à la position inactive, notamment en commandant le déplacement en coulissement de la tige par rapport au cylindre du vérin formant l'actionneur 41 de la pièce mâle d'accouplement 37 de la position sortie à la position rentrée, lorsque l'angle d'inclinaison mesuré par l'inclinomètre 1003 est inférieur au premier angle d'inclinaison prédéterminé.

Lorsque le ou l'un au moins des ensembles 10, 10', 10" du châssis à voie variable 100 comprend un unique premier dispositif d'anti-basculement 35, ce dernier est par exemple monté entre les bras de suspension gauche 15a, 27a et droite 15a, 27a de la première ou de la deuxième paire qui sont montés sur la barre de guidage avant 12a ou arrière 12a supportant le plus de poids de l'engin agricole 1000. Il s'agit par exemple de la barre de guidage arrière 12a, lorsque la cuve est montée sur le châssis principal 11, à l'arrière de l'engin agricole 1000.

Lorsque le ou l'un au moins des ensembles 10, 10', 10" du châssis à voie variable 100 comprend deux premiers dispositifs d'anti-basculement 35, l'unité de commande 1001 est par exemple conçue pour commander sélectivement les actionneurs 41 de l'un et de l'autre des premiers dispositifs d'anti-basculement 35, de sorte que le pivotement des bras de suspension gauche 15a et droit 15b de la première paire et celui des bras de suspension gauche 27a et droit 27b de la deuxième paire ne puissent pas être synchronisés en même temps. L'unité de commande 1001 peut encore être conçue pour ne commander que l'actionneur 41 du premier dispositif d'anti-basculement 35 qui est agencé au plus près de la barre de guidage avant 12a ou arrière 12b supportant le plus de poids de l'engin agricole 1000, ladite barre de guidage avant 12a ou arrière 12b pouvant être préalablement définie par l'agriculteur via l'interface utilisateur 1002 ou au moyen de capteurs de poids communiquant avec l'unité de commande 1001.

Le ou chaque ensemble 10, 10', 10" du châssis à voie variable 100 peut encore comprendre des deuxièmes dispositifs d'anti-basculement 42 (figure 2).

Chaque deuxième dispositif d'anti-basculement 42 est monté d'une part, sur l'un des bras de suspension 15a, 27a, 15b, 27b parmi les bras de suspension gauche 15a, 27a et droit 15b, 27b de la première paire ou de la première et de la deuxième paires, et d'autre part, sur la portion de châssis gauche 13a ou 13b sur laquelle ledit bras de suspension 15a, 27a, 15b, 27b est monté ou sur le châssis fixe 11 ou sur la partie de châssis avant 11a ou arrière 11b du même ensemble 10, 10', 10" que ledit bras de suspension 15a, 27a, 15b, 27b.

Le deuxième dispositif d'anti-basculement 42 est ainsi monté sur le bras de suspension 15a, 27a, 15b, 27b en parallèle du système de suspension gauche 16a, 28a ou droit 16b, 28b et/ou de l'amortisseur gauche 21a, 32a ou droit 21b, 32b qui sont montés sur le même bras de suspension 15a, 27a, 15b, 27b que le deuxième dispositif d'anti-basculement 42.

Le deuxième dispositif d'anti-basculement 42 est en outre conçu pour occuper :
- d'une part, une position de contrainte maximale dans laquelle le deuxième dispositif d'anti-basculement 42 contraint une longueur d'extension maximale dudit système de suspension gauche 16a, 28a ou droit 16b, 28b, prise suivant le premier ou le deuxième axe de suspension gauche 161a, 281a ou droit 161b, 281b dudit système de suspension gauche 16a, 28a ou droit 16b, 28b, à une première longueur prédéterminée,
- d'autre part, une position de contrainte minimale ou nulle dans laquelle le deuxième dispositif d'anti-basculement 42 contraint la longueur d'extension maximale dudit système de suspension gauche 16a, 28a ou droit 16b, 28b à une deuxième longueur prédéterminée, qui est inférieure à la première longueur, ou libère toute contrainte de longueur d'extension maximale dudit système de suspension gauche 16a, 28a ou droit 16b, 28b.

En position de contrainte maximale, le deuxième dispositif d'anti-basculement 42 permet ainsi de limiter la détente dudit système de suspension gauche 16a, 28a ou droit 16b, 28b et donc une course maximale d'écartement entre le bras de suspension 15a, 27a, 15b, 27b et la portion de châssis gauche 13a ou droite 13b sur laquelle ledit bras de suspension 15a, 27a, 15b, 27b est monté ou le châssis principal 11 ou la partie de châssis avant 11a ou arrière 11b du même ensemble 10, 10', 10" que ledit bras de suspension 15a, 27a, 15b, 27b.

Dans un dévers, lorsque l'une des portions de châssis gauche 13a et droite 13b du ou de l'un des ensembles 10, 10', 10", dite portion de châssis aval, est en aval du dévers et que l'autre des portions de châssis gauche 13a et droite 13b, dite portion de châssis amont, est en amont du dévers, la portion de châssis aval 13a, 13b supporte plus de poids que la portion de châssis amont 13b, 13a, de sorte le ou les systèmes de suspension gauches 16a, 28a ou droits 16b, 28b agencés du côté de la portion de châssis aval 13a, 13b se compriment, tandis que le ou les systèmes de suspension gauches 16a, 28a ou droits 16b, 28b agencés du côté de la portion de châssis amont 13b, 13a se détendent, ce qui a pour effet de transférer encore davantage le poids de l'engin agricole 1000 de la portion de châssis amont 13b, 13a à la portion de châssis aval 13a, 13b et peut ainsi entraîner un basculement de l'engin agricole 1000. En limitant la détente du ou des systèmes de suspension gauches 16a, 28a ou droits 16b, 28b agencés du côté de la portion de châssis amont 13b, 13a, moins de poids de l'engin agricole 1000 peut être transféré de la portion de châssis amont 13b, 13a à la portion de châssis aval 13a, 13b, ce qui réduit les risques de basculement de l'engin agricole 1000.

Le deuxième dispositif d'anti-basculement 42 peut aussi occuper toute position intermédiaire entre les positions de contrainte maximale et minimale ou nulle, le deuxième dispositif d'anti-basculement 42 contraignant alors une longueur d'extension maximale dudit système de suspension gauche 16a, 28a ou droit 16b, 28b à une longueur comprise entre les première et deuxième longueurs ou inférieure à la première longueur.

Pour cela, le deuxième dispositif d'anti-basculement 42 comprend par exemple un actionneur 43 et une élingue 44 comprenant une première extrémité 45 et une deuxième extrémité 46 opposée.

L'actionneur 43 du deuxième dispositif d'anti-basculement 42 est monté d'une part, sur l'un parmi le bras de suspension 15a, 27a, 15b, 27b et celui de la portion de châssis avant 13a ou arrière 13b, du châssis principal 11 et de la partie de châssis avant 11a ou arrière 11b sur lequel le deuxième dispositif d'anti-basculement 42 est monté, et d'autre part, sur la première extrémité 45 de l'élingue 44. La deuxième extrémité 46 de l'élingue 45 est en outre montée sur l'autre parmi le bras de suspension 15a, 27a, 15b, 27b et celui de la portion de châssis gauche 13a ou droite 13b, du châssis principal 11 et de la partie de châssis avant 11a ou arrière 11b sur lequel le deuxième dispositif d'anti-basculement 42 est monté.

L'actionneur 43 du deuxième dispositif d'anti-basculement 42 est encore conçu pour tendre l'élingue 44 depuis une position détendue dans laquelle le deuxième dispositif d'anti-basculement 42 occupe la position de contrainte minimale ou nulle vers une position tendue dans laquelle l'élingue 45 est plus tendue qu'en position détendue et le deuxième dispositif d'anti-basculement 42 occupe la position de contrainte maximale, et pour détendre l'élingue 45 depuis la position tendue vers la position détendue.

L'actionneur 43 du deuxième dispositif d'anti-basculement 42 est par exemple formé par un vérin comprenant une tige et un cylindre, l'un parmi la tige ou le cylindre étant monté sur l'un parmi le bras de suspension 15a, 27a, 15b, 27b et celui de la portion de châssis avant 13a ou arrière 13b, du châssis principal 11 et de la partie de châssis avant 11a ou arrière 11b sur lequel le deuxième dispositif d'anti-basculement 42 est monté, tandis que l'autre parmi le cylindre et la tige est monté sur la première extrémité 45 de l'élingue 44. La tige est en outre conçue pour coulisser dans le cylindre entre une position rentrée dans laquelle l'élingue 44 occupe la position tendue et une position sortie dans laquelle une extrémité de la tige du vérin, opposée au cylindre, est plus éloignée du cylindre qu'en position rentrée et l'élingue 44 occupe la position détendue.

Le vérin formant l'actionneur 43 du deuxième dispositif d'anti-basculement 42 est par exemple hydraulique. Il peut aussi être pneumatique ou encore électrique.

Une unité de commande 1001 électronique (figure 10) est par exemple conçue pour commander l'actionneur 43 du ou de chaque deuxième dispositif d'anti-basculement 42 de tendre ou de détendre l'élingue 44, notamment en commandant le déplacement en coulissement de la tige par rapport au cylindre du vérin formant l'actionneur 43 entre les positions sortie et rentrée. L'unité de commande 1001 peut commander ledit vérin soit indirectement via un circuit hydraulique ou pneumatique, lorsqu'il est hydraulique ou pneumatique, soit directement, lorsqu'il est électrique.

L'unité de commande 1001 peut en outre être conçue pour commander l'actionneur 43 du ou de chaque deuxième dispositif d'anti-basculement 42 de tendre l'élingue 44 de la position détendue à la position détendue ou à une position intermédiaire entre la position détendue et la position tendue, et de détendre l'élingue 44 de la position tendue à la position détendue ou à une position intermédiaire entre la position tendue et la positon détendue, lorsque l'unité de commande 1001 reçoit une commande envoyée par l'agriculteur via une interface utilisateur 1002 (figure 10) reliée à l'unité de commande 1001. L'interface utilisateur 1002 est par exemple agencée dans la cabine conducteur de l'engin agricole 1000.

L'unité de commande 1001 peut encore être conçue pour commander l'actionneur 43 du ou de chaque deuxième dispositif d'anti-basculement 42 de tendre l'élingue 44 de la position détendue à la position tendue, lorsqu'un inclinomètre 1003 (figure 10) monté sur l'engin agricole 1000, par exemple sur le châssis à voie variable 100, mesure un angle d'inclinaison entre la direction vertical Z et une direction de la force de gravité appliquée à l'engin agricole 1000, supérieure ou égale à un deuxième angle d'inclinaison prédéterminé, et pour commander l'actionneur 43 de détendre l'élingue 44 de la position tendue à la position détendue, lorsque l'angle d'inclinaison mesuré par l'inclinomètre 1003 est inférieur au deuxième angle d'inclinaison prédéterminé.

L'unité de commande 1001 peut aussi être conçue pour commander l'actionneur 43 du ou de chaque deuxième dispositif d'anti-basculement 42 de tendre et de détendre l'élingue 44, en fonction de l'angle d'inclinaison mesuré par l'inclinomètre 1003, plus l'angle d'inclinaison mesurée étant élevé, plus l'élingue 44 étant tendue par l'actionneur 43.

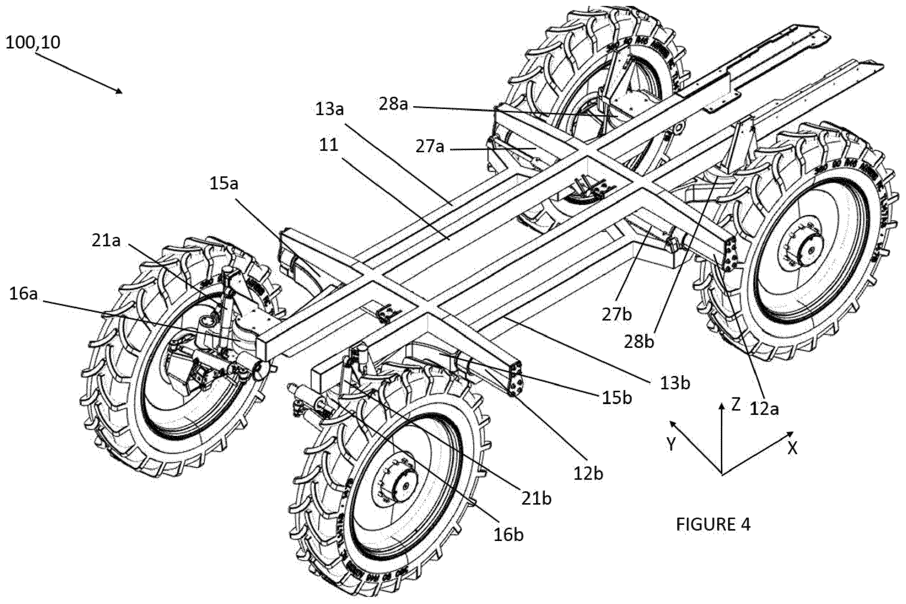

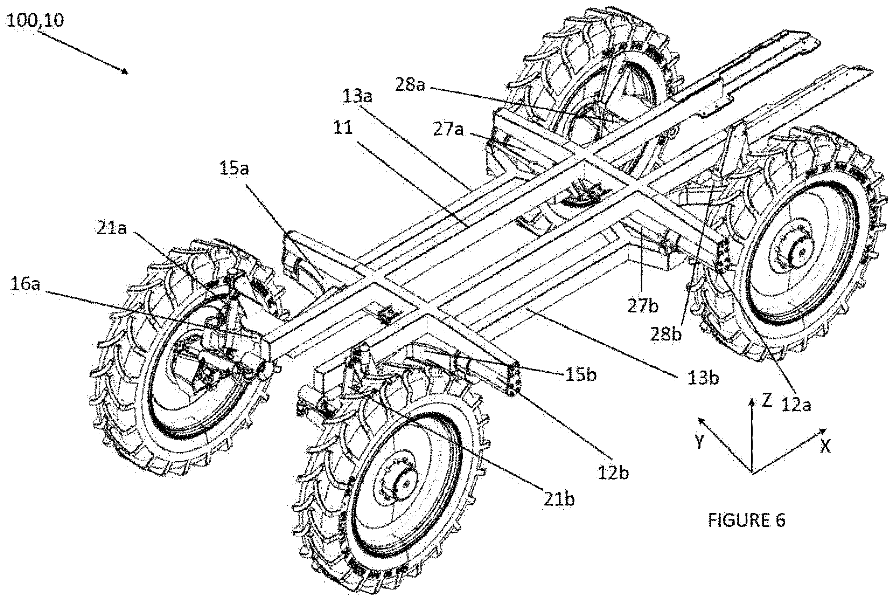

N'importe quel système de suspension connu peut être mis en oeuvre pour les systèmes de suspension gauches 16a, 28a et droites 16b, 28b de la première paire ou des première et deuxième paires. Il peut s'agir de ressorts à fil de compression (figures 1 à 3, 8 et 9), de systèmes de suspension pneumatiques, notamment à coussins ou à poumons d'air (figures 4 et 7), ou encore de vérins hydrauliques (figure 6). Il peut encore s'agir d'une jambe de force (figure 5) s'étendant suivant le premier ou le deuxième axe de suspension gauche 161a, 281a ou droit 161b, 281b, la jambe de force comprenant un vérin hydraulique ou pneumatique formant l'amortisseur gauche 21a, 32a ou droit 21b, 32b et s'étendant suivant ledit premier ou deuxième axe de suspension gauche 161a, 281a ou droit 161b, 281b, alors confondu avec le premier ou le deuxième axe d'amortissement gauche 21a, 32a ou droit 21b, 32b, ainsi qu'un ressort à fil de compression ou des poumons à air formant le système de suspension gauche 16a, 28a ou droit 16b, 28b, le ressort à fil de compression ou les poumons à air étant montés entre deux faces d'appui de la jambe de force, perpendiculaires audit premier ou deuxième axe de suspension gauche 161a, 281a ou droit 161b, 281b, autour du vérin hydraulique ou pneumatique.

N'importe quel amortisseur connu peut être mis en oeuvre pour les amortisseurs gauches 21a, 32a et droits 21b, 32b de la première paire ou des première et deuxième paires. Il s'agit par exemple de vérins hydrauliques ou encore de vérins pneumatiques (figures 1 à 4 et 5 à 9).

Le châssis à voie variable 100 du ou de chaque ensemble 10 comprend par exemple aussi un vérin de direction 47 monté entre chaque support de roue 14a, 26a, 14b, 26b parmi les supports de roue gauches 14a, 26a et droits 14b, 26b de la première paire ou des première et deuxième paires et le bras de suspension gauche 15a, 27a ou droit 15b, 27b de la première ou des première et deuxième paire sur lequel ledit support de roue 14a, 26a, 14b, 26b est monté, de manière à faire pivoter la roue 18a, 18b, 29a, 29b parmi les premières roues gauche 18a et droite 18b ou les premières et deuxièmes roues gauches 18a, 29a et droites 18b, 29b montée sur ledit support de roue 14a, 26a, 14b, 26b.

Le châssis à voie variable 100 décrit ci-dessus est particulièrement avantageux car il est à la fois simple à fabriquer et à monter et robuste. Il permet en outre d'obtenir une suspension indépendante pour chacune des premières et/ou des deuxièmes roues 18a, 18b, 29a, 29b quelle que soit la configuration de voie du châssis à voie variable 100.

## Revendications

1. Châssis à voie variable (100) pour engin agricole (1000), s'étendant, d'avant en arrière, suivant une direction longitudinale (X) et, de droite à gauche suivant une direction transversale (Y), perpendiculaire à la direction longitudinale (X), le châssis à voie variable (100) comprenant un châssis principal (11) fixe et au moins un ensemble (10, 10', 10") comprenant lui-même :
- une paire de barres de guidage (12a, 12b) fixes comprenant une barre de guidage avant (12a) et une barre de guidage arrière (12b) sur lesquelles le châssis principal (11) est fixé, chacune desdites barres de guidage avant (12a) et arrière (12b) s'étendant suivant un axe de guidage (17a, 17b) globalement transversal,
- une paire de portions de châssis (13a, 13b) comprenant une portion de châssis gauche (13a) et une portion de châssis droite (13b) chacune montée coulissante sur chacune des barres de guidage avant (12a) et arrière (12b) suivant leur axe de guidage (17a, 17b) respectif,
- une première paire de supports de roue (14a, 14b) comprenant un support de roue gauche (14a) sur lequel une première roue gauche (18a) est destinée à être montée rotative, et un support de roue droite (14b) sur lequel une première roue droite (18b) est destinée à être montée rotative,
le châssis à voie variable (100) étant **caractérisé en ce que** le ou chaque ensemble (10, 10', 10") comprend en outre :
- une première paire de bras de suspension (15a, 15b) comprenant un bras de suspension gauche (15a) et un bras de suspension droit (15b) montés pivotants sur l'une des barres de guidage avant (12a) et arrière (12b), autour de l'axe de guidage (17a, 17b) de ladite barre de guidage avant (12a) ou arrière (12b), et coulissants sur ladite barre de guidage (12a) ou arrière (12b) suivant l'axe de guidage (17a, 17b) de ladite barre de guidage avant (12a) ou arrière (12b),
- les supports de roue gauche (14a) et droit (14b) de la première paire étant respectivement montés pivotants sur le bras de suspension gauche (15a) et sur le bras de suspension droit (15b) de la première paire, autour d'un axe de pivotement (20a, 20b) globalement orienté suivant une direction verticale (Z), perpendiculaire aux directions longitudinale (X) et transversale (Y),
- une première paire de systèmes de suspension (16a, 16b) comprenant un système de suspension gauche (16a) et un système de suspension droit (16b), le système de suspension gauche (16a) étant monté entre le bras de suspension gauche (15a) de la première paire et la portion de châssis gauche (13a) ou le châssis principal (11), en s'étendant suivant un premier axe de suspension gauche (161a), le système de suspension droit (16b) étant monté entre le bras de suspension droit (15b) de la première paire et la portion de châssis droite (13b) ou le châssis principal (11), en s'étendant suivant un premier axe de suspension droit (161b).

2. Châssis à voie variable (100) selon la revendication 1, dans lequel le ou l'un au moins des ensembles (10, 10', 10") comprend une première paire d'amortisseurs (21a, 21b) comprenant un amortisseur gauche (21a) et un amortisseur droit (21b), l'amortisseur gauche (21a) étant monté entre le bras de suspension gauche (15a) de la première paire et la portion de châssis gauche (13a) ou le châssis principal (11), l'amortisseur droit (21b) étant monté entre le bras de suspension droit (15b) de la première paire et la portion de châssis droite (13b) ou le châssis principal (11).

3. Châssis à voie variable (100) selon la revendication 1 ou la revendication 2, dans lequel le ou l'un au moins des ensembles (10, 10', 10") comprend un mécanisme d'entraînement (22) conçu :
- d'une part, pour entraîner en coulissement la portion de châssis gauche (13a) et le bras de suspension gauche (15a) de la première paire par rapport aux barres de guidage avant (12a) et arrière (12b), suivant les axes de guidage (17a, 17b), entre une première position et une deuxième position dans laquelle la portion de châssis gauche (13a) et le bras de suspension gauche (15a) sont chacun situés plus à gauche que dans la première position,
- d'autre part, pour entraîner en coulissement la portion de châssis droite (13b) et le bras de suspension droit (15b) de la première paire par rapport aux barres de guidage avant (12a) et arrière (12b), suivant les axes de guidage (17a, 17b), entre une première position et une deuxième position dans laquelle la portion de châssis droite (13b) et le bras de suspension droit (15b) sont chacun situés plus à droite que dans la première position.

4. Châssis à voie variable (100) selon la revendication 3, dans lequel le mécanisme d'entraînement (22) est conçu :
- d'une part, pour entraîner en coulissement la portion de châssis gauche (13a) entre les première et deuxième positions, la portion de châssis gauche (13a) étant elle-même conçue pour entraîner en coulissement le bras de suspension gauche (15a) de la première paire entre les première et deuxième positions,
- d'autre part, pour entraîner en coulissement la portion de châssis droite (13b) entre les première et deuxième positions, la portion de châssis droite (13b) étant elle-même conçue pour entraîner en coulissement le bras de suspension droit (15b) de la première paire entre les première et deuxième positions.

5. Châssis à voie variable (100) selon la revendication 3 ou la revendication 4, dans lequel le ou l'un au moins des ensembles (10, 10', 10") comprend un premier dispositif d'anti-basculement (35) apte à solidariser en pivotement le bras de suspension gauche (15a) et le bras de suspension droit (15b) de la première paire par rapport à la barre de guidage avant (12a) ou arrière (12b) sur laquelle lesdits bras de suspension gauche (15a) et droit (15b) sont montés, lorsque lesdits bras de suspension gauche (15a) et droite (15b) occupent chacun leur première position.

6. Châssis à voie variable (100) selon la revendication 5, dans lequel le premier dispositif d'anti-basculement (35) comprend une pièce femelle d'accouplement (36) portée par l'un parmi le bras de suspension gauche (15a) et le bras de suspension droit (15b) de la première paire, et une pièce mâle d'accouplement (37) portée par l'autre parmi le bras de suspension gauche (15a) et le bras de suspension droit (15b) de la première paire, dans lequel la pièce femelle d'accouplement (36) comprend une ouverture (38) s'étendant autour d'un axe d'accouplement (39), parallèle aux axes de guidage (17a, 17b) des barres de guidage avant (12a) et arrière (12b), et donnant en outre accès à un logement, et dans lequel la pièce mâle d'accouplement (37) comprend une tige (40) s'étendant suivant l'axe d'accouplement (39), ladite tige (40) étant apte à s'introduire dans le logement de la pièce femelle d'accouplement (36), par l'ouverture (38), lorsque les bras de suspension gauche (15a) et droit (15b) de la première paire coulissent depuis leur deuxième position vers leur première position ou qu'ils occupent chacun leur première position.

7. Châssis à voie variable (100) selon la revendication 6, dans lequel la pièce mâle d'accouplement (37) comprend un actionneur (41) conçu pour entraîner le doigt (40) en translation suivant l'axe d'accouplement (39), par rapport au bras de suspension gauche (15a) ou droit (15b) de la première paire qui porte la pièce mâle d'accouplement (37), entre une position active dans laquelle le doigt (40) occupe le logement de la pièce femelle d'accouplement (36) et une position inactive dans laquelle le doigt (40) libère le logement de la pièce femelle d'accouplement (36), lorsque les bras de suspension gauche (15a) et droite (15b) de la première paire occupent chacun leur première position.

8. Châssis à voie variable (100) selon l'une des revendications 1 à 7, le ou l'un au moins des ensembles (10, 10', 10") comprend en outre :
- une deuxième paire de supports de roue (26a, 26b) comprenant un support de roue gauche (26a) sur lequel une deuxième roue gauche (29a) est destinée à être montée rotative, et un support de roue droite (26b) sur lequel une deuxième roue droite (29b) est destinée à être montée rotative,
- une deuxième paire de bras de suspension (27a, 27b) comprenant un bras de suspension gauche (27a) et un bras de suspension droit (27b) montés pivotants sur l'autre parmi les barres de guidage avant (12a) ou arrière (12b) de la première paire, autour de l'axe de guidage (17a, 17b) de ladite barre de guidage avant (12a) ou arrière (12b), et coulissants sur ladite barre de guidage avant (12a) ou arrière (12b) suivant ledit axe de guidage (17a, 17b), les supports de roue gauche (26a) et droite (26b) de la deuxième paire étant respectivement montés pivotants sur le bras de suspension gauche (27a) et sur le bras de suspension droit (27b) de la deuxième paire, autour d'un axe de pivotement (31a, 31b) globalement vertical,
- une deuxième paire de systèmes de suspension (28a, 28b) comprenant un système de suspension gauche (28a) et un système de suspension droit (28b), le système de suspension gauche (28a) étant monté entre le bras de suspension gauche (27a) de la deuxième paire et la portion de châssis gauche (13a) ou le châssis principal (11), en s'étendant suivant un deuxième axe de suspension gauche (281a), le système de suspension droit (28b) étant monté entre le bras de suspension droit (27b) de la deuxième paire et la portion de châssis droite (13b) ou le châssis principal (11), en s'étendant suivant un deuxième axe de suspension droit (281b).

9. Châssis à voie variable (100) selon l'une des revendications 1 à 8, comprenant deux ensembles (10, 10', 10") et dans lequel le châssis principal (11) comprend une partie de châssis avant (11a) et une partie de châssis arrière (11b) articulée sur la partie de châssis avant (11a) autour d'un axe d'articulation (34) sensiblement vertical, les barres de guidage avant (12a) et arrière (12b) de l'un des ensembles (10, 10', 10") étant fixées sur l'une des parties de châssis avant (11a) et arrière (11b) du châssis principal (11), les barres de guidage avant (12a) et arrière (12b) de l'autre des ensembles (10, 10', 10") étant fixées sur l'autre des parties de châssis avant (11a) et arrière (11b) du châssis principal (11).

10. Châssis à voie variable (100) selon l'une des revendications 1 à 9, dans lequel le ou chaque ensemble (10, 10', 10") comprend des deuxièmes dispositifs d'anti-basculement (42), chaque deuxième dispositif d'anti-basculement (42) étant monté d'une part, sur l'un des bras de suspension (15a, 27a, 15b, 27b) parmi les bras de suspension gauche (15a, 27a) et droit (15b, 27b) de la première paire ou de la première et de la deuxième paires, et d'autre part, sur la portion de châssis gauche (13a) ou droite (13b) sur laquelle ledit bras de suspension (15a, 27a, 15b, 27b) est monté ou sur le châssis fixe (11) ou sur la partie de châssis avant (11a) ou arrière (11b) du même ensemble (10, 10', 10") que ledit bras de suspension (15a, 27a, 15b, 27b), le deuxième dispositif d'anti-basculement (42) étant en outre conçu pour occuper :
- d'une part, une position de contrainte maximale dans laquelle le deuxième dispositif d'anti-basculement (42) contraint une longueur d'extension maximale du système de suspension gauche (16a, 28a) ou droit (16b, 28b) qui est monté sur le même bras de suspension (15a, 27a, 15b, 27b) que le deuxième dispositif d'anti-basculement (42), à une première longueur prédéterminée, la longueur d'extension maximale étant prise suivant le premier ou le deuxième axe de suspension gauche (161a, 281a) ou droit (161b, 281b) dudit système de suspension gauche (16a, 28a) ou droit (16b, 28b),
- d'autre part, une position de contrainte minimale ou nulle dans laquelle le deuxième dispositif d'anti-basculement (42) contraint la longueur d'extension maximale dudit système de suspension gauche (16a, 28a) ou droit (16b, 28b) à une deuxième longueur prédéterminée, qui est inférieure à la première longueur, ou libère toute contrainte de longueur d'extension maximale dudit système de suspension gauche (16a, 28a) ou droit (16b, 28b).

11. Châssis à voie variable (100) selon la revendication 10, dans lequel chaque deuxième dispositif d'anti-basculement comprend un actionneur (43) monté d'une part, sur l'un parmi le bras de suspension (15a, 27a, 15b, 27b) et celui de la portion de châssis avant (13a) ou arrière (13b), du châssis principal (11) et de la partie de châssis avant (11a) ou arrière (11b) sur lequel le deuxième dispositif d'anti-basculement (42) est monté, et d'autre part, sur une première extrémité (45) d'une élingue (44), la deuxième extrémité (46) de l'élingue (45) étant montée sur l'autre parmi le bras de suspension (15a, 27a, 15b, 27b) et celui de la portion de châssis gauche (13a) ou droite (13b), du châssis principal (11) et de la partie de châssis avant (11a) ou arrière (11b) sur lequel le deuxième dispositif d'anti-basculement (42) est monté, et dans lequel l'actionneur (43) est conçu pour tendre l'élingue (44) depuis une position détendue dans laquelle le deuxième dispositif d'anti-basculement (42) occupe la position de contrainte minimale ou nulle vers une position tendue dans laquelle l'élingue (45) est plus tendue qu'en position détendue et le deuxième dispositif d'anti-basculement (42) occupe la position de contrainte maximale, et pour détendre l'élingue (45) depuis la position tendue vers la position détendue.

12. Engin agricole (1000) comprenant un châssis à voie variable (100) selon l'une des revendications 1 à 11.

13. Engin agricole (1000) selon la revendication 12, l'engin agricole (1000) étant une remorque agricole ou un tracteur agricole.
